(19) **Europäisches Patentamt / European Patent Office / Office européen des brevets**

(11) **EP 3 467 717 A1**

(12) # EUROPEAN PATENT APPLICATION

(43) Date of publication:
10.04.2019 Bulletin 2019/15

(51) Int Cl.:
*G06N 3/00* (2006.01)          *G06N 3/04* (2006.01)
*G06N 3/08* (2006.01)          *G06N 7/00* (2006.01)

(21) Application number: 17275185.1

(22) Date of filing: 21.11.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 04.10.2017 GR 20170100448

(71) Applicant: Prowler.io Limited
Cambridge, Cambridgeshire CB2 1LA (GB)

(72) Inventors:
• TUKIAINEN, Aleksi
  Cambridge, Cambridgeshire CB2 1LA (GB)
• KIM, Dongho
  Cambridge, Cambridgeshire CB2 1LA (GB)
• NICHOLSON, Thomas
  Cambridge, Cambridgeshire CB2 1LA (GB)
• TOMCZAK, Marcin
  Cambridge, Cambridgeshire CB2 1LA (GB)
• MUNOZ DE COTE FLORES LUNA, Jose Enrique
  Cambridge, Cambridgeshire CB2 1LA (GB)
• FERGUSON, Neil
  Cambridge, Cambridgeshire CB2 1LA (GB)
• ELEFTHERIADIS, Stefanos
  Cambridge, Cambridgeshire CB2 1LA (GB)
• SEPPA, Juha
  Cambridge, Cambridgeshire CB2 1LA (GB)
• BEATTIE, David
  Cambridge, Cambridgeshire CB2 1LA (GB)
• JENNINGS, Joel
  Cambridge, Cambridgeshire CB2 1LA (GB)
• HENSMAN, James
  Cambridge, Cambridgeshire CB2 1LA (GB)
• LEIBFRIED, Felix
  Cambridge, Cambridgeshire CB2 1LA (GB)
• GRAU-MOYA, Jordi
  Cambridge, Cambridgeshire CB2 1LA (GB)
• JOHN, Sebastian
  Cambridge, Cambridgeshire CB2 1LA (GB)
• BOU-AMMAR, Haitham
  Cambridge, Cambridgeshire CB2 1LA (GB)
• VRANCX, Peter
  Cambridge, Cambridgeshire CB2 1LA (GB)

(74) Representative: EIP
EIP Europe LLP
Fairfax House
15 Fulwood Place
London WC1V 6HU (GB)

(54) **MACHINE LEARNING SYSTEM**

(57) There is described a machine learning system comprising a first subsystem and a second subsystem remote from the first subsystem. The first subsystem comprises an environment having multiple possible states, the environment being arranged to output a state signal comprising data indicative of the state of the environment at a discrete time and to receive an action signal operable to cause a change of state, and a decision making subsystem comprising one or more agents, each agent being configured to generate an action signal dependent on the data conveyed by the received state signal and a policy associated with that agent, the decision making subsystem being further arranged to generate experience data dependent on data conveyed by the state signal and the action signal. The first subsystem also includes a first network interface configured to send said experience data to the second subsystem and to receive policy data from the second subsystem. The second subsystem comprises: a second network interface configured to receive experience data from the first subsystem and send policy data to the first subsystem; and a learning routine configured to process said received experience data to generate said policy data, dependent on the experience data, for updating one or more policies associated with the one or more agents. The decision making subsystem is operable to update the one or more policies associated with the one or more agents in accordance with policy data received from the second subsystem.

**Fig. 4**

**Description**

Technical Field

This invention is in the field of machine learning systems. One aspect of the invention has particular applicability to decision making utilising reinforcement learning algorithms. Another aspect of the invention concerns improving a probabilistic model utilised when simulating an environment for a reinforcement learning system.

Background

Machine learning involves a computer system learning what to do by analysing data, rather than being explicitly programmed what to do. While machine learning has been investigated for over fifty years, in recent years research into machine learning has intensified. Much of this research has concentrated on what are essentially pattern recognition systems.

In addition to pattern recognition, machine learning can be utilised for decision making. Many uses of such decision making have been put forward, from managing a fleet of taxis to controlling non-playable characters in a computer game. The practical implementation of such decision making presents may technical problems.

Summary

According to one aspect, there is provided a machine learning system comprising a first subsystem and a second subsystem remote from the first subsystem. The first subsystem comprises an environment having multiple possible states, the environment being arranged to output a state signal comprising data indicative of the state of the environment at a discrete time and to receive an action signal operable to cause a change of state, and a decision making subsystem comprising one or more agents, each agent being configured to generate an action signal dependent on the data conveyed by the received state signal and a policy associated with that agent, the decision making subsystem being further arranged to generate experience data dependent on data conveyed by the state signal and the action signal. The first subsystem also includes a first network interface configured to send said experience data to the second subsystem and to receive policy data from the second subsystem. The second subsystem comprises: a second network interface configured to receive experience data from the first subsystem and send policy data to the first subsystem; and a learning routine configured to process said received experience data to generate said policy data, dependent on the experience data, for updating one or more policies associated with the one or more agents. The decision making subsystem is operable to update the one or more policies associated with the one or more agents in accordance with policy data received from the second subsystem.

The environment may include a probabilistic model, allowing the state signal to convey data relating to probable future states in addition to data associated with the current state. The probabilistic model may approximate a stochastic intensity function associated with a set of discrete observations by receiving data corresponding to the set of discrete points, generating a variational distribution depending on a predetermined prior distribution and comprising a predetermined number of Fourier components, and determining a set of parameters for the variational distribution such that the variational distribution approximates a posterior distribution conditioned on the data, the posterior distribution corresponding to the square root of the stochastic intensity function.

The technique for approximating the stochastic intensity function outlined above has wider applicability. Accordingly, a further aspect provides a computer-implemented method of approximating a stochastic intensity function associated with a set of discrete points in a domain, comprising: receiving data corresponding to the set of discrete points; generating a variational distribution depending on a predetermined prior distribution and comprising a predetermined number of Fourier components; and determining a set of parameters for the variational distribution such that the variational distribution approximates a posterior distribution conditioned on the data, the posterior distribution corresponding to the square root of the stochastic intensity function.

Brief Description of the Drawings

Various embodiments of the invention will now be described with reference to the accompanying figures, in which:

Figure 1 schematically shows a process in which a single agent interacts with an environment in a reinforcement learning problem;
Figure 2 schematically shows a process in which two autonomous agents interact with an environment in a reinforcement learning problem;

Figure 3 is a schematic diagram showing examples of policy updates for three different configurations of agents;

Figure 4 is a schematic diagram showing the main components of a data processing system according to an embodiment of the invention;

Figure 5 is a flow diagram representing operations of the data processing system of Figure 4;

Figure 6 is a schematic diagram of a deep neural network (DNN) used by in the data processing system of Figure 4;

Figure 7 is a flow diagram showing operations of the DNN of Figure 6 to learn an approximate state value function;

Figure 8 shows graphs of a prior distribution and a posterior distribution for a one-dimensional function;

Figure 9 is a flow diagram representing operations to generate a probabilistic model according to an embodiment of the invention;

Figure 10 is a schematic diagram showing an example of a transition system;

Figure 11 is a schematic diagram of a server used to implement a learning subsystem for a correctness by learning algorithm.

Figure 12 is a schematic diagram of a deep neural network (DNN) configured for use in a correctness by learning algorithm;

Figure 13 is a schematic diagram of an alternative deep neural network (DNN) configured for use in a correctness by learning algorithm;

Figure 14 is a schematic diagram of a user device used to implement an interaction subsystem for a correctness by learning algorithm.

Figure 15 is a flow diagram representing a routine performed by a data processing system to implement a correctness by learning algorithm

Detailed Description

*Reinforcement learning: definitions and formulation*

For the purposes of the following description and accompanying drawings, a reinforcement learning problem is definable by specifying the characteristics of one or more *agents* and an *environment.* The methods and systems described herein are applicable to a wide range of reinforcement learning problems, including both continuous and discrete high-dimensional state and action spaces. However, an example of a specific problem, namely managing a fleet of taxis in a city, is referred to frequently for illustrative purposes and by way of example only.

A software agent, referred to hereafter as an *agent,* is a computer program component that makes decisions based on a set of input signals and performs actions based on these decisions. In some applications of reinforcement learning, each agent represents a real-world entity. In a first example of managing a fleet of taxis in a city, an agent is be assigned to represent each individual taxi in the fleet. In a second example of managing a fleet of taxis, an agent is assigned to each of several subsets of taxis in the fleet. In other applications of reinforcement learning, an agent does not represent a real-world entity. For example, an agent can be assigned to a non-playable character (NPC) in a video game. In another example, an agent is used to make trading decisions based on financial input data. Furthermore, in some examples agents send control signals to real world entities. In some examples, an agent is implemented in software or hardware that is part of the real world entity (for example, within an autonomous robot). In other examples, an agent is implemented by a computer system that is remote from the real world entity.

An *environment* is a virtual system with which agents interact, and a complete specification of an environment is referred to as a *task.* In many practical examples of reinforcement learning, the environment simulates a real-world system, defined in terms of information deemed relevant to the specific problem being posed. In the example of managing a fleet of taxis in a city, the environment is a simulated model of the city, defined in terms of information relevant to the problem of managing a fleet of taxis, including for example at least some of: a detailed map of the city; the location of each taxi in the fleet; information representing variations in time of day, weather, and season; the mean income of households in different areas of the city; the opening times of shops, restaurants and bars; and information about traffic.

It is assumed that interactions between an agent and an environment occur at discrete time steps $n$ = 0, 1, 2, 3, .... The discrete time steps do not necessarily correspond to times separated by fixed intervals. At each time step, the agent receives data corresponding to an observation of the environment and data corresponding to a reward. The data corresponding to an observation of the environment may also include data indicative of probable future states, and the sent data is referred to as a *state signal* and the observation of the environment is referred to as a *state.* The state perceived by the agent at time step n is labelled $S_n$. The state observed by the agent may depend on variables associated with the agent itself. For example, in the taxi fleet management problem, the state observed by an agent representing a taxi can depend on the location of the taxi.

In response to receiving a state signal indicating a state $S_n$ at a time step $n$, an agent is able to select and perform an *action* $A_n$ from a set of available actions in accordance with a Markov Decision Process (MDP). In some examples, the true state of the environment cannot be ascertained from the state signal, in which case the agent selects and performs the Action $A_n$ in accordance with a Partially-Observable Markov Decision Process (PO-MDP). Performing a selected action generally has an effect on the environment. Data sent from an agent to the environment as an agent performs an action is referred to as an *action signal.* At a later time step $n + 1$, the agent receives a new state signal from the environment indicating a new state $S_{n+1}$. The new state signal may either be initiated by the agent completing the action $A_n$, or in response to a change in the environment. In the example of managing a fleet of taxis, an agent representing a particular taxi may receive a state signal indicating that the taxi has just dropped a passenger at a point A in the city. Examples of available actions are then: to wait for passengers at A; to drive to a different point B; and to drive continuously around a closed loop C of the map. Depending on the configuration of the agents and the environment, the set of states, as well as the set of actions available in each state, may be finite or infinite. The methods and systems described herein are applicable in any of these cases.

Having performed an action $A_n$, an agent receives a *reward signal* corresponding to a numerical *reward* $R_{n+1}$, where the reward $R_{n+1}$ depends on the state $S_n$, the action $A_n$ and the state $S_{n+1}$. The agent is thereby associated with a sequence of states, actions and rewards $(S_n, A_n, R_{n+1}, S_{n+1}, ...)$ referred to as a trajectory $T$. The reward is a real number that may be positive, negative, or zero. In the example of managing a fleet of taxis in a city, a possible strategy for rewards to be assigned is for an agent representing a taxi to receive a positive reward each time a customer pays a fare, the reward being proportional to the fare. Another possible strategy is for the agent to receive a reward each time a customer is picked up, the value of the reward being dependent on the amount of time that elapses between the customer calling the taxi company and the customer being picked up. An agent in a reinforcement learning problem has an objective of maximising the expectation value of a *return,* where the value of a return $G_n$ at a time step $n$ depends on the rewards received by the agent at future time steps. For some reinforcement learning problems, the trajectory $T$ is finite, indicating a finite sequence of time steps, and the agent eventually encounters a *terminal state* $S_T$ from which no further actions are available. In a problem for which $T$ is finite, the finite sequence of time steps refers to an *episode* and the associated task is referred to as an *episodic* task. For other reinforcement learning problems, the trajectory $T$ is infinite, and there are no terminal states. A problem for which $T$ is infinite is referred to as an infinite horizon task. Managing a fleet of taxis in a city is an example of a problem having a continuing task. An example of a reinforcement learning problem having an episodic task is an agent learning to play the card game blackjack, in which each round of play is an episode. As an example, a possible definition of the return is given by Equation (1) below:

$$G_n = \sum_{j=0}^{T-n-1} \gamma^j R_{n+j+1}, \qquad (1)$$

in which $\gamma$ is a parameter called the *discount factor,* which satisfies $0 \le \gamma \le 1$, with $\gamma = 1$ only being permitted if $T$ is finite. Equation (1) states that the return assigned to an agent at time step $n$ is the sum of a series of future rewards received by the agent, where terms in the series are multiplied by increasing powers of the discount factor. Choosing a value for the discount factor affects how much an agent takes into account likely future states when making decisions, relative to the state perceived at the time that the decision is made. Assuming the sequence of rewards $\{R_j\}$ is bounded, the series in Equation (1) is guaranteed to converge. A skilled person will appreciate that this is not the only possible definition of a return. For example, in R-learning algorithms, the return given by Equation (1) is replaced with an infinite sum over undiscounted rewards minus an average expected reward. The applicability of the methods and systems described herein is not limited to the definition of return given by Equation (1).

In response to an agent receiving a state signal, the agent selects an action to perform based on a *policy.* A policy is a stochastic mapping from states to actions. If an agent follows a policy $\pi$, and receives a state signal at time step $n$ indicating a specific state $S_n = s$, the probability of the agent selecting a specific action $A_n = a$ is denoted by $\pi(a|s)$. A policy for which $\pi_n(a|s)$ takes values of either 0 or 1 for all possible combinations of $a$ and $s$ is a *deterministic* policy. Reinforcement learning algorithms specify how the policy of an agent is altered in response to sequences of states, actions, and rewards that the agent experiences.

The objective of a reinforcement learning algorithm is to find a policy that maximises the expectation value of a return. Two different expectation values are often referred to: the *state value* and the *action value* respectively. For a given policy $\pi$, the *state value function* $v_\pi(s)$ is defined for each state $s$ by the equation $v_\pi(s) = \mathbb{E}_\pi(G_n | S_n = s)$, which states that the state value of state $s$ given policy $\pi$ is the expectation value of the return at time step $n$, given that at time step $n$ the agent receives a state signal indicating a state $S_n = s$. Similarly, for a given policy $\pi$, the *action value function* $q_\pi(s, a)$ is defined for each possible state-action pair $(s, a)$ by the equation

$q_{\pi}(s,a) = \mathbb{E}_{\pi}(G_n|S_n = s, A_n = a),$ which states that the action value of a state-action pair (*s, a*) given policy $\pi$ is the expectation value of the return at time step *t*, given that at time step *n* the agent receives a state signal indicating a state $S_n = s$, and selects an action $A_n = a$. A computation that results in a calculation or approximation of a state value or an action value for a given state or state-action pair is referred to as a *backup*. A reinforcement learning algorithm generally seeks a policy that maximises either the state value function or the action value function for all possible states or state-action pairs. In many practical applications of reinforcement learning, the number of possible states or state-action pairs is very large or infinite, in which case it is necessary to approximate the state value function or the action value function based on sequences of states, actions, and rewards experienced by the agent. For such cases, approximate value functions $\hat{v}(s,w)$ and $\hat{q}(s,a,w)$ are introduced to approximate the value functions $v_{\pi}(s)$ and $q_{\pi}(s,a)$ respectively, in which *w* is a vector of parameters defining the approximate functions. Reinforcement learning algorithms then adjust the parameter vector *w* in order to minimise an error (for example a root-mean-square error) between the approximate value functions $\hat{v}(s,w)$ or $\hat{q}(s,a,w)$ and the value functions $v_{\pi}(s)$ or $q_{\pi}(s,a)$.

In many reinforcement learning algorithms (referred to as action-value methods), a policy is defined in terms of approximate value functions. For example, an agent following a greedy policy always selects an action that maximises an approximate value function. An agent following an $\varepsilon$-greedy policy instead selects, with probability 1 - $\varepsilon$, an action that maximises an approximate value function, and otherwise selects an action randomly, where $\varepsilon$ is a parameter satisfying $0 < \varepsilon < 1$. Other reinforcement learning algorithms (for example actor-critic methods) represent the policy $\pi$ without explicit reference to an approximate value function. In such methods, the policy $\pi$ is represented by a separate data structure. It will be appreciated that many further techniques can be implemented in reinforcement learning algorithms, for example bounded rationality or count-based exploration.

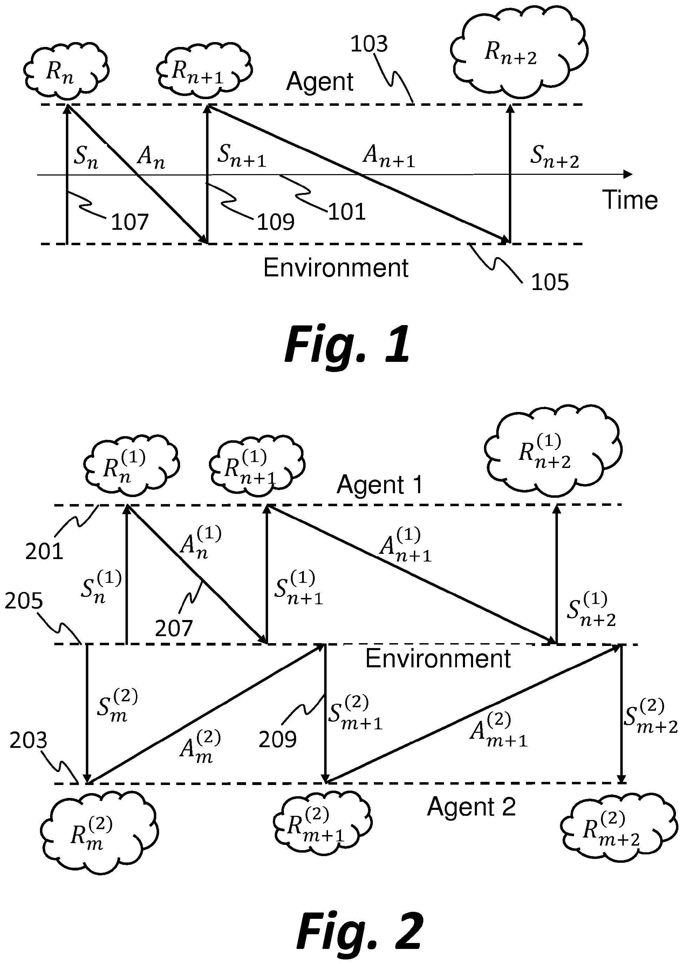

Figure 1 illustrates an example of a single agent interacting with an environment. The horizontal axis 101 represents increasing time, the dashed line 103 above the axis 101 represents the agent, and the dashed line 105 below the axis 101 represents the environment. At time step *n*, the agent receives a first state signal 107 from the environment, indicating a state $S_n$, and the agent receives an associated reward $R_n$ associated with the state $S_n$. In response to receiving the first state signal 107, the agent selects an action $A_n$ in accordance with a policy $\pi$, and performs the action $A_n$. The action $A_n$ has an effect on the environment, and is completed at time step $n + 1$. Immediately after the action $A_n$ has been performed, the environment sends a new state signal 109 to the agent, indicating a new state $S_{n+1}$. The new state $S_{n+1}$ is associated with a reward $R_{n+1}$. The agent then performs an action $A_{n+1}$, leading to a state $S_{n+2}$ associated with a reward $R_{n+2}$. As shown in Figure 1, the interval between time steps $n + 1$ and $n + 2$ does not need to be the same as the interval between time steps *n* and $n + 1$, and the reward $R_{n+2}$ does not need to be the same as the rewards $R_{n+1}$ or $R_n$.

A range of reinforcement learning algorithms are well-known, and different algorithms may be suitable depending on characteristics of the environment and the agents that define a reinforcement learning problem. Examples of reinforcement learning algorithms include dynamic programming methods, Monte Carlo methods, and temporal difference learning methods, including actor-critic methods. The present application introduces systems and methods that facilitate the implementation of both existing and future reinforcement learning algorithms in cases of problems involving large or infinite numbers of states, and/or having multiple agents, that would otherwise be intractable using existing computing hardware.

*Multi-agent systems*

Systems and methods in accordance with the present invention are particularly advantageous in cases in which more than one agent interacts with an environment. The example of managing a fleet of taxis in a city is likely to involve many agents. Figure 2 illustrates an example in which two agents interact with an environment. As in Figure 1, time increases from left to right. The top dashed line 201 represents Agent 1, the bottom dashed line 203 represents Agent 2, and the middle dashed line 205 represents the environment. Agent 1 has a trajectory $\left(S_n^{(1)}, A_n^{(1)}, R_{n+1}^{(1)}, ...\right),$ and Agent 2 has a trajectory $\left(S_m^{(2)}, A_m^{(2)}, R_{m+1}^{(2)}, ...\right),$ and in this example the set of time steps at which Agent 1 receives state signals is different from the set of time steps at which Agent 2 receives state signals. In this example, the agents do not send signals directly to each other, but instead interact indirectly via the environment (although in other examples signals can be sent directly between agents). For example, the action $A_n^{(1)},$ performed by Agent 1 and represented by arrow 207 has an effect on the environment that alters the information conveyed by state signal 209, indicating a state $S_{m+1}^{(2)}$ to Agent 2. In an example in which Figure 2 represents two competing taxis in a small town, a first taxi being represented by Agent 1 and a second taxi being represented by Agent 2, the action $A_n^{(1)}$ may represent the first taxi driving to a taxi rank in the town in order to seek customers. The action $A_m^{(2)}$ may represent the second taxi driving to the taxi rank from a different part of the town. When the second taxi reaches the taxi rank, Agent 2 receives a state signal indicating a state $S_{m+1}^{(2)}$ in which the first taxi is already waiting at the taxi rank. Agent 2 receives a negative reward $R_{m+2}^{(2)}$ because a state in which the first taxi is already waiting at the taxi rank is not a favourable result for Agent 2. Agent 2 then makes a decision to take action $S_{m+1}^{(2)}$, causing the second taxi to drive to a different taxi rank.

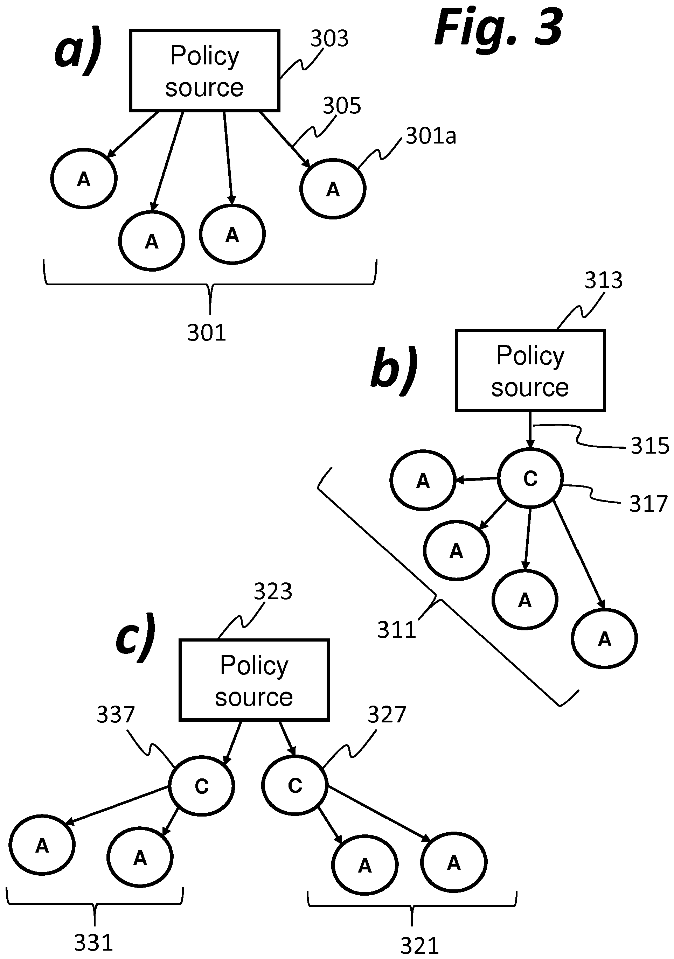

In the example of Figure 2, the two agents Agent 1 and Agent 2 act autonomously such that each agent makes decisions independently of the other agent, and the agents interact indirectly via the effect each agent has on the environment. Each agent selects actions according a policy that is distinct from the policy of each other agent. In the example of Figure 3a, four autonomous agents, referred to collectively as agents 301, receive policy data from a data processing component referred to as policy source 303. At a first time, policy source 303 sends policy data 305 to agent 301a, causing the policy of agent 301a to be updated. Similarly, policy source 303 sends policy data to each of the agents 301, causing the policies of the agents 301 to be updated. In some examples, the policies of the agents 301 are updated simultaneously. In other examples, the policies of the agents 301 are updated at different times. The configuration of Figure 3a is referred to as a decentralised configuration. A skilled person will appreciate that in the case of a decentralised configuration of agents such as that of Figure 3a, the computing resources necessary to apply a particular reinforcement learning algorithm for each agent, including memory, processing power, and storage, can be arranged to scale proportionally with the number of neighbouring agents. Furthermore, a separate reinforcement learning algorithm can be applied to each agent using a separate processor or processor core, leading to parallelised reinforcement learning.

In the example of Figure 3b, policy source 313 sends policy data 315 to co-ordinator 317. Co-ordinator 317 is an agent that receives state signals from agents 311 and sends instructions to agents 311 to perform actions. The union of agents 311 and co-ordinator 317 is an example of a composite agent, and the configuration of agents in Figure 3b is referred to as a centralised configuration. In cases where several agents work together to learn a solution to a problem or to achieve a shared objective (referred to as co-operative problem solving), centralised configurations such as that of Figure 3b typically achieve better coherence and co-ordination than autonomous agents such as those of Figure 3a. Coherence describes the quality of a solution to the problem, including the efficiency with which agents use resources in implementing the solution. Co-ordination describes the degree to which agents avoid extraneous activity. For a composite agent having a single co-ordinator, the computational expense of implementing a learning algorithm typically scales exponentially with the number of agents receiving instructions from the co-ordinator. For centralised configurations of agents, a co-ordinator selects actions for each agent included in a corresponding composite agent. In some specific examples, particular states are specified to be "bad states" and it is an objective of the co-ordinator to select combinations of actions to avoid bad states. An example of a bad state in co-operative problem solving is a deadlock state, in which no combination of possible actions exists that advances agents towards a shared objective. In the present application, a novel method, referred to as "correctness by learning", is provided for composite agents, in which a co-ordinator learns to avoid bad states in a particular class of problem.

The example of Figure 3c includes two composite components, each having a co-ordinator and two agents. Co-ordinator 327 and agents 321 form a first composite agent, and co-ordinator 337 and agents 331 form a second composite agent. The configuration of agents in Figure 3c is referred to as locally centralised. For co-operative problem solving, a locally centralised configuration typically provides a compromise between: relatively good coherence, relatively good co-ordination, and high computational expense, associated with a centralised configuration; and relatively poor coherence, relatively poor co-ordination, and relatively low computational expense, associated with a decentralised co-ordination. The applicability of methods and systems described herein is not limited to the configurations of agents described above and it is not a concern of the present application to propose novel configurations of agents for reinforcement learning problems. Instead, the present application introduces systems and methods that facilitate the flexible implementation of reinforcement learning algorithms for a wide range of configurations of agents.

In some examples, agents are provided with a capability to send messages to one another. Examples of types of messages that a first agent may send to a second agent are "inform" messages, in which the first agent provides information to the second agent, and "request" messages, in which the first agent requests the second agent to perform an action. A message sent from a first agent to a second agent becomes part of a state signal received by the second agent and, depending on a policy of the second agent, a subsequent action performed by the second agent may depend on information received in the message. For examples in which agents are provided with a capability to send messages to each other, an agent communication language (ACL) is required. An ACL is a standard format for exchange of messages between agents. An example of an ACL is knowledge query and manipulation language (KQML).

For examples in which agents are used for co-operative problem solving, various problem-sharing protocols may be implemented, leading to co-operative distributed problem solving. An example of a well-known problem-sharing protocol is the Contract Net, which includes a process of recognising, announcing, bidding for, awarding, and expediting problems. It is not a concern of the present application to develop problem-sharing protocols.

Agents in a decision-making system may be benevolent, such that all of the agents in the decision-making system share a common objective, or may be fully self-interested where each agent has a dedicated objective, or different groups of autonomous agents may exist with each group of autonomous agents sharing a common objective. For a particular example in which agents are used to model two taxi companies operating in a city, some of the agents represent taxis operated by a first taxi company and other agents represent taxis operated by a second taxi company. In this example, all of the agents are autonomous agents, and agents representing taxis operated by the same taxi company have the capability to send messages to one another. In this example, conflict may arise between agents representing taxis operated by the first taxi company and agents representing taxis operated by the second taxi company.

Different agents may be designed and programmed by different programmers/vendors. In such an arrangement, can learn how to interact with other agents through learning from experience by interacting with these "foreign" agents.

*System architecture*

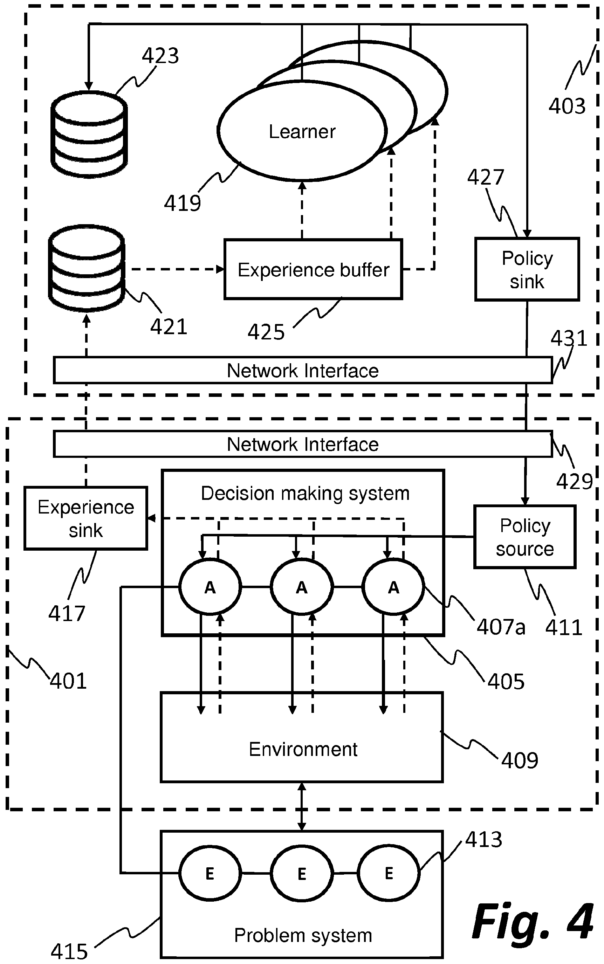

The data processing system of Figure 4 includes interaction subsystem 401, learning subsystem 403 and problem system 415.

Interaction subsystem 401 includes decision making system 405, which comprises *N* agents, collectively referred to as agents 407, of which only three agents are shown for ease of illustration. Agents 407 perform actions on environment 409 depending on state signals received from environment 409, with the performed actions selected in accordance with policies received from policy source 411. In this example, each of agents 407 represents an entity 413 in problem system 415. Specifically, in this example problem system 415 is a fleet management system for a fleet of taxis in a city, and each entity 413 is a taxi in the fleet. For example, agent 407a represents entity 413a. In this example environment 409 is a dynamic model of the city, defined in terms of information deemed relevant to the problem of managing the fleet of taxis. Specifically, environment 409 is a probabilistic model of the city, as will be described herein. Interaction system also includes experience sink 417, which sends experience data to learning subsystem 403.

Learning subsystem 403 includes learner 419, which is a computer program that implements a learning algorithm. In a specific example, learner 419 includes several deep neural networks (DNNs), as will be described herein. However, the learner may implement alternative learning algorithms which do not involve DNNs. Learning subsystem 419 also includes two databases: experience database 421 and skill database 423. Experience database 421 stores experience data generated by interaction system 401, referred to as an experience record. Skill database 423 stores policy data generated by learner 419. Learning subsystem also includes experience buffer 425, which processes experience data in preparation for the trajectory data to be sent to learner 419, and policy sink 427, which sends policy data generated by learner 419 to interaction subsystem 401.

Interaction subsystem 401 includes communication module 429 and learning subsystem 403 includes communication module 431. Data is sent between interaction subsystem 401 and learning subsystem 403 via communication module 429 and communication 431.

In the example of the problem system 415 being a fleet management system, interaction subsystem 401 is a connected to the fleet management system and learning subsystem 403 is remote from the fleet management system and from interaction subsystem 401. Communication module 429 and communication module 431 are interconnected by a communications network (not shown). More specifically, in this example the network is the Internet, learning subsystem 403 includes several remote servers hosted on the Internet, and interaction subsystem 401 includes a local server. Learning subsystem 403 and interaction subsystem 401 interact via an application programming interface (API).

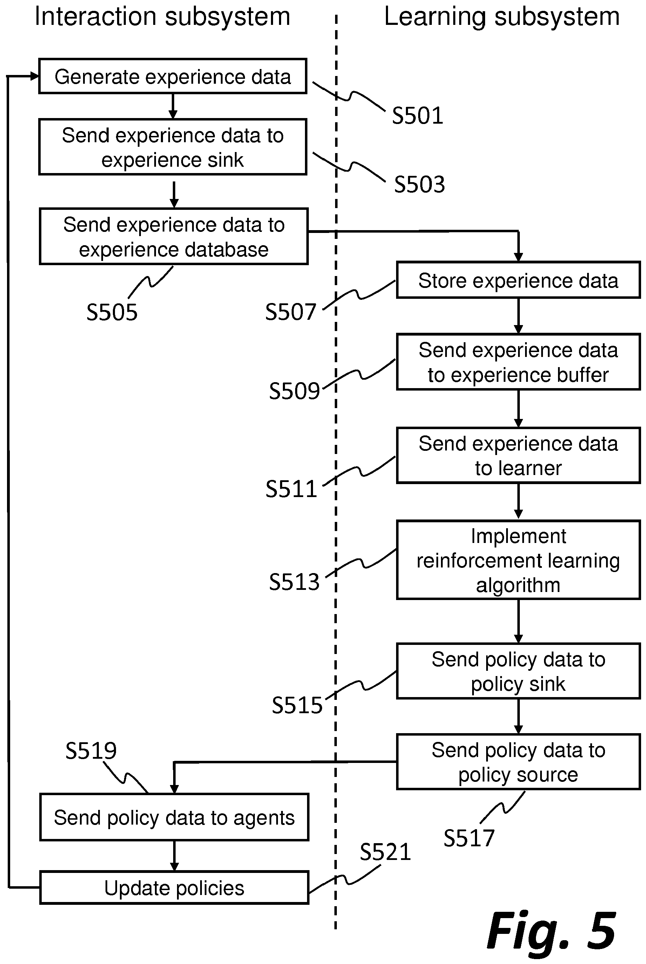

As shown in Figure 5, during a reinforcement learning operation, each of the agents 407 generates, at S501, experience data corresponding to an associated trajectory consisting of successive triplets of state-action pairs and rewards. For example, agent 407a, which is labelled $i = 1$, generates experience data corresponding to a trajectory including a sequence of tuples $\left( S_n^{(1)}, A_n^{(1)}, R_{n+1}^{(1)}, S_{n+1}^{(1)} \right)$ for n = 1, 2, ..., $\infty$ as the data processing system is in operation. Agents 407 send, at S503, experience data corresponding to sequentially generated tuples

$$\left(S_n^{(i)}, A_n^{(i)}, R_{n+1}^{(i)}, S_{n+1}^{(1)}\right)$$ for $n$ = 1, 2 , ..., $\infty$; $i$ = 1, 2 ,..., $N$, to experience sink 417. Experience sink 417 transmits, at S505, the experience data to experience database 421 via a communications network. Depending on configuration, experience sink 417 may transmit experience data in response to receiving data from one of the agents 407, or may instead transmit batches of experience data corresponding to several successive state-action-reward tuples. Experience sink 417 may transmit batches of experience data corresponding to each of the agents 407 separately. In the present example, experience sink 417 transmits batches of experience data, each batch corresponding to several state-action-reward tuples corresponding to one of the agents 407. Experience database 421 stores the experience data received from experience sink 417.

Experience database 421 sends, at S509, the experience data to experience buffer 425, which arranges the experience data into an appropriate data stream for processing by learner 419. In this example, experience database 421 only stores the experience data until it has been sent to experience buffer 421. Experience buffer 421 sends, at S511, the experience data to learner 419. Depending on the configuration of learner 419, the experience data may be sent to learner 419 as a continuous stream, or may instead be sent to learner 419 in batches. For a specific example in which the agents are arranged in a decentralised configuration similar to that shown in Figure 3a, the learner may include a separate DNN for each of the agents 407. Accordingly, in that specific example, experience buffer 425 sends experience data corresponding to each of the agents 407 to a separate DNN.

Learner 419 receives experience data from experience buffer 425 and implements, at S513, a reinforcement learning algorithm. The specific choice of reinforcement learning algorithms implemented by learner 419 is selected by a user and may be chosen depending on the nature of a specific reinforcement learning problem. In a specific example, learner 419 implements a temporal-difference learning algorithm, and uses supervised-learning function approximation to frame the reinforcement learning problem as a supervised learning problem, in which each backup plays the role of a training example. Supervised-learning function approximation allows a range of well-known gradient descent methods to be utilised by a learner in order to learn approximate value functions $\hat{v}(s,\mathrm{w})$ or $\hat{q}(s,a,\mathrm{w})$. The learner 419 may use the backpropagation algorithm for DNNs, in which case the vector of weights w for each DNN is a vector of connection weights in the DNN.

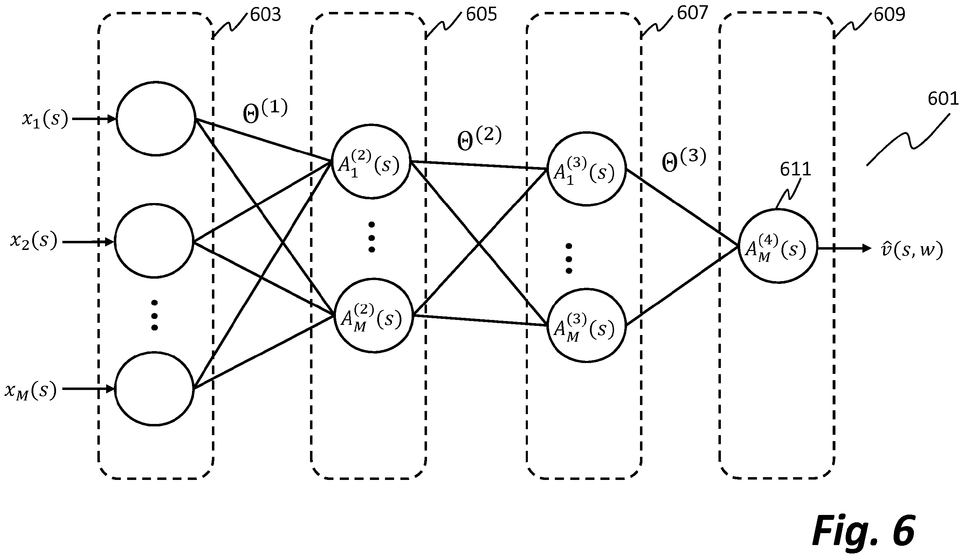

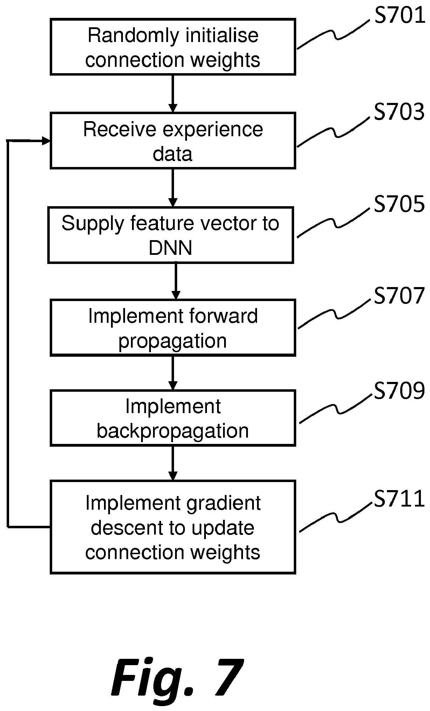

By way of example only, a DNN 601, which can be used by learner 419 to learn approximate value functions, will now be described with reference to Figures 6 and 7. It is, however, emphasised that other algorithms could be used to generate policy data.

DNN 601 consists of input layer 603, two hidden layers: first hidden layer 605 and second hidden layer 607, and output layer 609. Input layer 603, first hidden layer 605 and second hidden layer 607 each has M neurons and each neuron of input layer 603, first hidden layer 605 and second hidden layer 607 is connected with each neuron in the subsequent layer. The specific arrangement of hidden layers, neurons, and connections is referred to as the architecture of the network. A DNN is any artificial neural network with multiple hidden layers, though the methods described herein may also be implemented using artificial neural networks with one or zero hidden layers. Different architectures may lead to different performance levels for a given task depending on the complexity and nature of the approximate state value function to be learnt. Associated with each set of connections between successive layers is a matrix $\Theta^{(j)}$ for $j$ = 1, 2, 3 and for each of these matrices the elements are the connection weights between the neurons in the preceding layer and subsequent layer.

Figure 7 describes how learner 419 uses DNN 601 to learn an approximate state value function $\hat{v}(s,w)$ in accordance with a temporal difference learning algorithm, given a sequence of backups corresponding to a sequence of states $S_n$, $S_{n+1}$, $S_{n+2}$, ... observed by an agent. In this example, the return is given by Equation (1). Learner 419 randomly initialises the elements of the matrices $\Theta^{(j)}$ for $j$ = 1, 2, 3, at S701, to values in an interval $[-\delta, \delta]$, where $\delta$ is a small user-definable parameter. The vector of parameters $w$ contains all of the elements of the matrices $\Theta^{(j)}$ for $j$ = 1, 2, 3, unrolled into a single vector.

Learner 419 receives, at S703, experience data from experience buffer 425 corresponding to a state $S_n = s$ received by an agent at a time step n. The experience data takes the form of a feature vector $q(s) = (q_1(s), q_2(s), ..., q_M(s))^T$ with M components (where $T$ denotes the transpose). Each of the $M$ components of the feature vector $q(s)$ is a real number representing an aspect of the state $s$. In this example, the components of the feature vector $q(s)$ are normalised and scaled as is typical in supervised learning algorithms in order to eliminate spurious effects caused to the output of the learning algorithm by different features inherently varying on different length scales, or being distributed around different mean values. Learner 419 supplies, at S705, the $M$ components of $q(s)$ to the $M$ neurons of the input layer 603 of DNN 601.

DNN 601 implements forward propagation, at S707, to calculate an approximate state value function. The components of $q(s)$ are multiplied by the components of the matrix $\Theta^{(1)}$ corresponding to the connections between input layer 603 and first hidden layer 605. Each neuron of first hidden layer 605 computes a real number $A_k^{(2)}(s) = g(z),$

referred to as the activation of the neuron, in which $z = \sum_m \Theta_{km}^{(1)} q_m(s)$ is the weighted input of the neuron. The function $g$ is generally nonlinear with respect to its argument and is referred to as the activation function. In this example, $g$ is the sigmoid function. The same process of is repeated for second hidden layer 607 and for output layer 609, where the activations of the neurons in each layer are used as inputs to the activation function to compute the activations of neurons in the subsequent layer. The activation of output neuron 611 is the approximate state value function $\hat{v}(S_n,w_n)$ for state $S_n = s$, given a vector of parameters $w_n$ evaluated at time step $n$.

Having calculated $\hat{v}(S_n,w_n)$, DNN 601 implements, at S709, the backpropagation algorithm to calculate gradients $\nabla_{w_n}\hat{v}(S_n,w_n)$ with respect to the parameter vector $w_n$. DNN 601 then implements gradient descent, at S711, in parameter space to update the parameters. Gradient descent is implemented in this example by equation (2):

$$w_{n+1} = w_n - \frac{1}{2}\alpha\nabla_{w_n}[V_n(s) - \hat{v}(S_n, w_n)]^2$$
$$= w_n + \alpha[V_n - \hat{v}(S_n, w_n)]\nabla_{w_n}\hat{v}(S_n, w_n), \qquad (2)$$

in which $\alpha$ is a parameter referred to as the learning rate, $V_n(s)$ is an estimate of the state value function $v_\pi(s)$. In this example, the estimate $V_n(s)$ is given by $V_n(s) = R_{n+1} + \gamma\hat{v}(S_{n+1},w_n)$, and the gradient $\nabla_w\hat{v}(S_n,w_n)$ is augmented using a vector of eligibility traces, as is well-known in temporal difference learning methods. In some examples, other optimisation algorithms are used instead of the gradient descent algorithm given by Equation (2). In some examples, each layer in a neural network include an extra neuron called a bias unit that is not connected to any neuron in the previous layer and has an activation that does not vary during the learning process (for example, bias unit activations may be set to 1). In some examples of reinforcement learning algorithms, a learner computes approximate action value functions $\hat{q}(s,a,w)$, instead of state value functions $\hat{v}(s,w)$. Analogous methods to that described above may be used to compute action value functions.

Referring again to Figure 5, Learner 419 sends, at S515, policy data to policy sink 427. Policy sink 427 sends, at S517, the policy data to policy source 411 via the network. Policy source 411 then sends, at S519, the policy data to agents 407, causing the policies of agents 407 to be updated at S521. Depending on the reinforcement learning algorithm used by learner 419, the policy data may either cause approximate value functions $\hat{v}(s,w)$ or $\hat{q}(s,a,w)$ stored by agents 407 to be updated (for action-value methods), or may instead cause separate data structures representing polices of agents 407 to be updated (for actor-critic methods and other methods in which the policy is stored as a separate data structure). In the example of Figure 4, an actor-critic method is employed, and therefore agents use the policy data to update data structures that explicitly represent policies. At certain time steps (for example, a time step after which a policy is measured to satisfy a given performance metric), Learner 419 also sends policy data to skill database 423. Skill database 423 stores a skill library including approximate value functions and/or policies learned during the operation of the data processing system, which can later be provided to agents and/or learners in order to negate the need to relearn the same or similar approximate value functions and/or policies from scratch.

The architecture shown in Figure 4, in which the learning subsystem is remotely hosted and the interaction subsystem is locally hosted, is designed to provide flexibility and scalability for a wide variety of reinforcement learning systems. In many reinforcement learning systems, data is frequently provided to the environment, causing the task to change. In the example of managing a fleet of taxis in a city, data corresponding to an event such as a change in weather may be provided to environment 409, causing a probabilistic model of environment 409 to be altered and therefore causing the task to change. Furthermore, the task associated with environment 409 is dependent on action signals received from agents 407. The architecture of Figure 4 decouples on the one hand the sending of experience data and policy data between the interaction subsystem and the learning subsystem and on the other hand the sending of data between the agents and the environment. In the system of Figure 4, only experience data and policy data are required to be transferred over the network between learning subsystem 403 and the interaction subsystem 40. Experience data corresponding to states and actions experienced by agents 407 is relatively compact, with state information capable of being reduced to feature vectors (although in some examples all information about a state is included in the experience data so as to be available for analysis by the learning subsystem). Further, the format of experience data is independent on the nature of environment 409 and is specified by the API through which interaction system 401 and learning system 403 interact. It is therefore possible for learning subsystem 403 to be ignorant of details of environment 409, which allows flexibility as a range of interaction systems are able to be connected with learning system 403 over the network without making substantial alterations within learning subsystem 403. Policy data is also relatively compact. For example, in the case of an actor-critic method, a scalar signal could be used to transfer policy data from learner 419 to each of the agents 407 in order for agents 407 to update policies, although a vector signal or a matrix of values may be used in some examples. The frequency at which experience data and policy data are transferred between learning subsystem 403 and interaction subsystem 401 is configurable. For example, in some examples experience data is sent in batches corresponding to a configurable number of time steps. Similarly, in some examples the reinforcement learning algorithm implemented by learner 419 works in a batch configuration, such that policy data is sent to interaction system 401 after learner 419 has processed experience data corresponding to a configurable number of time steps. In some examples, configuring the batch size as described above is manual, in which case a user selects the size of the batches of experience data. In other examples configuring the batch size is automatic, in which case an optimal batch size is calculated and selected depending on the specific reinforcement learning algorithm and the specific configuration of agents 407 and environment 409. Configuring the batch size provides flexibility and scalability regarding the number of agents 407 and the complexity of environment 409, because in doing so the time scale associated with the learning process performed by learning subsystem 403 is decoupled from the time scale associated with time steps in interaction subsystem 401. For large numbers of agents and/or complex environments, the time scale associated with each time step is typically much shorter than the time scale associated with the reinforcement learning process, so configuring an appropriate batch size means that interaction subsystem 403 is able to operate without being slowed down by the reinforcement learning algorithm implemented by learning system 401.

Distributing the processing between a local interaction subsystem and a remote learning subsystem has further advantages. For example, the data processing subsystem can be deployed with the local interaction subsystem utilising the computer hardware of a customer and the learning subsystem utilising hardware of a service provider (which could be located in the "cloud"). In this way, the service provider can make hardware and software upgrades without interrupting the operation of the local interaction subsystem by the customer.

As described herein, reinforcement learning algorithms may be parallelised for autonomous agents, with separate learning processes being carried out by learner 419 for each of the agents 407. For systems with large numbers of agents, the system of Figure 4 allows for learning subsystem 403 to be implemented by a distributed computing system. Further, for composite agents such as those described in Figure 3b or 3c, in which the computational expense of learning algorithms typically scale exponentially with the number of component agents, servers having powerful processors, along with large memory and storage, may be provided. Implementing the learning subsystem using a remote, possibly distributed, system of servers, allows the necessary computing resources to be calculated depending on the configuration of the agents and the complexity of the environment, and for appropriate resources to be allocated to learning subsystem 403. Computing resources are thereby allocated efficiently.

*Probabilistic modelling*

As stated above, an environment is a virtual system with which agents interact, and the complete specification of the environment is referred to as a task. In some examples, an environment simulates a real-world system, defined in terms of information deemed relevant to the specific problem being posed. Some examples of environments in accordance with the present invention include a probabilistic model which can be used to predict future conditions of the environment. In this way, state signals sent from an environment to agents can include information corresponding not only to a prevailing condition of the environment, but also to likely future conditions of the environment. In an example of managing a fleet of taxis in a city in which a probabilistic model is included in the environment, an agent representing a taxi may receive a state signal indicating that an increase in demand for taxis is likely to occur in a certain region of the city at a given point in the future. In this example, the probabilistic model is used to generate a probability distribution for taxi demand in the city. This allows agents to predict variations in demand and to select actions according to these predictions, rather than simply reacting to observed variations in demand. Further to providing additional state information to agents, in some examples a probabilistic model is used to generate artificial training data to be incorporated into a reinforcement learning process, as will be described in more detail hereafter.

It is an objective of the present application to provide a computer-implemented method for implementing a particular type of probabilistic model of a system. The probabilistic model is suitable for incorporation into an environment in a reinforcement learning problem, and therefore the described method further provides a method for implementing a probabilistic model within a reinforcement learning environment for a data processing system such as that shown in Figure 4. Novel techniques are provided that significantly decrease the computational cost of implementing the discussed probabilistic model, thereby allowing larger scale models and more complex environments to be realised. A formal definition of the probabilistic model will be described hereafter.

The present method relates to a type of inhomogeneous Poisson process referred to as a Cox process. For a $D$-dimensional domain $\chi \subset \mathbb{R}^d$, a Cox process is defined by a stochastic intensity function $\lambda: \chi \to \mathbb{R}^+$, such that

for each point **x** in the domain $\chi$, $\lambda(x)$ is a non-negative real number. A number $N_p(\tau)$ of points found in a sub-region $\tau \subset \chi$ is assumed to be Poisson distributed such that $N_p(\tau) \sim \text{Poisson}(\lambda_\tau)$ for $\lambda_\tau = \int_\tau \lambda(x)\mathrm{d}x$. The interpretation of the domain $\chi$ and the Poisson-distributed points depends on the system that the model corresponds to. In the example of managing a fleet of taxis in a city, the domain $\chi$ is three-dimensional, with first and second dimensions corresponding to co-ordinates on a map of the city, and a third dimension corresponding to time. $N_p(\tau)$ then refers to the number of taxi requests received over a given time interval in a given region of the map. The stochastic intensity function $\lambda(x)$ therefore gives a probabilistic model of taxi demand as a function of time and location in the city. The aim of the present method is to infer the stochastic intensity function $\lambda(x)$, given a set of discrete data $\mathbf{X}_N = \left\{ x^{(n)} \right\}_{n=1}^N$ corresponding to observed points in a sub-region $\tau$ of domain $\chi$. In the example of managing a fleet of taxis in a city, each data point $x^{(n)}$ for $n = 1, ..., N$ corresponds to the location and time of an observed taxi request in the city during a fixed interval.

The present method is an example of a Bayesian inference scheme. Such schemes are based on the application of Bayes' theorem in a form such as that of Equation (3):

$$p(\lambda(x)|\mathbf{X}_N) = \frac{p(\mathbf{X}_N|\lambda(x))p(\lambda(x))}{p(\mathbf{X}_N)}, \qquad (3)$$

in which:

- $p(\lambda(x)|\mathbf{X}_N)$ is a posterior probability distribution of the function $\lambda(x)$ conditioned on the data $\mathbf{X}_N$;
- $p(\mathbf{X}_N|\lambda(x))$ is a probability distribution of the data $\mathbf{X}_N$ conditioned on the function $\lambda(x)$, referred to as the likelihood of $\lambda(x)$ given the data $\mathbf{X}_N$;
- $p(\lambda(x))$ is a prior probability distribution of functions $\lambda(x)$ assumed in the model, also referred to simply as a prior; and
- $p(\mathbf{X}_N)$ is the marginal likelihood, which is calculated by marginalising the likelihood over functions $\lambda$ in the prior distribution, such that $p(\mathbf{X}_N) = \int p(\mathbf{X}_N|\lambda(x))p(\lambda(x))\mathrm{d}f$.

For the Cox process described above, the likelihood of $\lambda(x)$ given the data $\mathbf{X}_N$ is given by Equation (4):

$$p(\mathbf{X}_N|\lambda(x)) = \exp\left( -\int_\tau \lambda(x)\mathrm{d}x \right) \prod_{n=1}^N \lambda(x^{(n)}), \qquad (4)$$

which is substituted into Equation (3) to give Equation (5):

$$p(\lambda(x)|\mathbf{X}_N) = \frac{\exp\left( -\int_\tau \lambda(x)dx \right) \prod_{n=1}^N \lambda(x^{(n)}) \, p(\lambda(x))}{\int p(\lambda(x)) \exp\left( -\int_\tau \lambda(x)dx \right) \prod_{n=1}^N \lambda(x^{(n)})\mathrm{d}\lambda}. \qquad (5)$$

In principle, the inference problem is solved by calculating the posterior probability distribution using Equation (5). In practice, calculating the posterior probability distribution using Equation (5) is not straightforward. First, it is necessary to provide information about the prior $p(\lambda(x))$. This is a feature of all Bayesian inference schemes and various methods have been developed for providing such information. For example, some methods include specifying a form of the function to be inferred ($\lambda(x)$ in the case of Equation (5)), which includes a number of parameters to be determined. For such methods, Equation (5) then results in a probability distribution over the parameters of the function to be inferred. Other methods do not include explicitly specifying a form for the function to be inferred, and instead assumptions are made directly about the prior ($p(\lambda(x))$ in the case of Equation (5)). A second reason that calculating the posterior probability distribution using Equation (5) is not straightforward is that computing the nested integral in the denominator of Equation (5) is computationally very expensive, and the time taken for the inference problem to be solved for many methods therefore becomes prohibitive if the number of dimensions $D$ and/or the number of data points $N$ is large (the nested integral is said to be doubly-intractable). The doubly-intractable integral of Equation (5) is particularly problematic for cases in which the probabilistic model is incorporated into an environment for a reinforcement learning problem, in which one of the dimensions is typically time, and therefore the integral over the region $\tau$ involves an integral over a history of the environment. Known methods for approaching problems involving doubly-intractable integrals of the kind appearing in Equation (5) typically involve discretising the domain $\tau$, for example using a regular grid, in order to pose a tractable approximate problem. Such methods thereby circumvent the double intractability of the underlying problem, but suffer from sensitivity to the choice of discretisation, particularly in cases where the data points are not located on the discretising grid. The present method provides a novel approach to address the difficulties mentioned above such that the posterior $p(\lambda(x)|\mathbf{X}_N)$ given above by Equation (5) is approximated with a relatively low computational cost, even for large values of $N$. The method therefore provides a tractable method for providing a probabilistic model for incorporation into an environment for a reinforcement learning problem. Broadly, the method involves two steps: first, the stochastic intensity function $\lambda(x)$ is assumed to be related to a random function $f(x)$ that is distributed according to a Gaussian process. Second, a variational approach is applied to construct a Gaussian process $q(f(x))$ that approximates the posterior distribution $p(f(x)|\mathbf{X}_N)$. The posterior Gaussian process is chosen to have a convenient form based on a set of $M$ Fourier components, where the parameter $M$ is used to control a bias related to a characteristic length scale of inferred functions in the posterior Gaussian process. The form chosen for the posterior Gaussian process results in the variational approach being implemented with a relatively low computational cost.

In the present method, a function $f$ is assumed to be related to the stochastic intensity function $\lambda$ by the simple identity $\lambda(x) \equiv [f(x)]^2$. The posterior distribution of $\lambda$ conditioned on the data $\mathbf{X}_N$ is readily computed if the posterior distribution of $f$ conditioned on the data $\mathbf{X}_N$ is known (or approximated). Defining $f$ in this way permits a Gaussian process approximation to be applied, in which a prior $p(f(x))$ is constructed by assuming that $f(x)$ is a random function distributed according to a Gaussian process. In the following section, the present method will be described for the one-dimensional case $D=1$, and extensions to $D>1$, which are straightforward extensions of the $D=1$ case, will be described thereafter.

*Variational Gaussian process method in one dimension*

The following section describes in some mathematical detail a method of providing a probabilistic model in accordance with an aspect of the present invention.

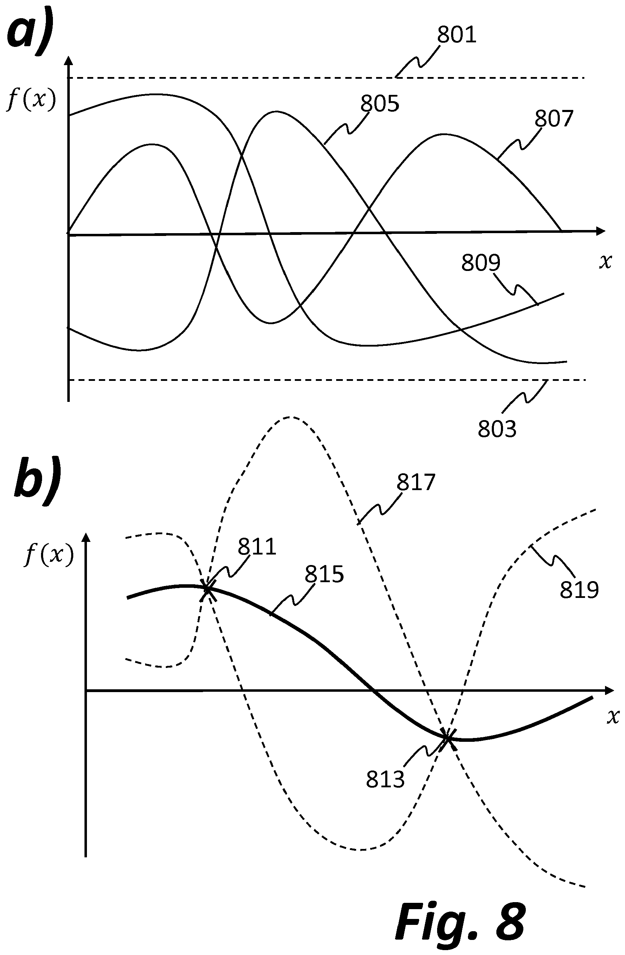

For illustrative purposes, Figure 8a shows an example of a prior constructed for a one-dimensional function $f(x)$, for which $f(x)$ is assumed to be distributed according to a Gaussian process having a mean function of zero. Dashed lines 801 and 803 are each separated from the mean function by twice the standard deviation of the distribution, and solid curves 805, 807, and 809 are sample functions taken from the prior distribution. Figure 8b illustrates a posterior distribution $f(x)|\mathbf{X}_2$, conditioned on two data points 811 and 813. Although in this example the observations of the function are made directly, in an inhomogeneous Poisson process model the data is related indirectly to the function through a likelihood equation. Solid line 815 shows the mean function of the posterior distribution and dashed lines 817 and 819 are each separated from the mean function by twice the standard deviation of the posterior distribution. In this example, the mean function represented by solid line 815 passes through both of the data points, and the standard deviation of the posterior distribution is zero at these points. This is not necessarily the case for all posterior distributions conditioned on a set of points.

Returning to the present method, a prior is constructed by assuming $f(x)$ is distributed as a Gaussian process: $f(x) \sim \mathrm{GP}(0, k(x,x'))$, which has a mean function of zero and a covariance function $k(x,x')$ having a specific form as will be described hereafter. In one specific example, $k(x,x')$ that is a member of the Matérn family with half-integer order. It is further assumed that $f(x)$ depends on an $2M + 1$-dimensional vector $\mathbf{u}$ of inducing variables $u_m$ for $m = 1, ...,2M + 1$, where $2M + 1 < N$. The idea is to select the inducing variables such that the variational method used for approximating the posterior $p(f(x)|\mathbf{X}_N)$ is implemented at a relatively low computational cost.

Any conditional distribution of a Gaussian process is also a Gaussian process. In this case, the distribution $f(x)|\mathbf{u}$ conditioned on the inducing variables $\mathbf{u}$ is written in a form given by Equation (6):

$$f(x)|\,\mathbf{u} \sim \mathrm{GP}\Big(\mathbf{k_u}(x)^{\mathrm{T}}\mathbf{K_{uu}^{-1}}\mathbf{u}, k(x, x') - \mathbf{k_u}(x)^{\mathrm{T}}\mathbf{K_{uu}^{-1}}\mathbf{k_u}(x')\Big), \qquad (6)$$

in which the $m^{\mathrm{th}}$ component of the vector function $\mathbf{k_u}(x)$ is defined as $\mathbf{k_u}(x)[m] \equiv \mathrm{cov}(u_m,f(x))$, and the $(m,m')$ element of the matrix $\mathbf{K_{uu}}$ is defined as $\mathbf{K_{uu}}[m,m'] \equiv \mathrm{cov}(u_m,u_{m'})$, with cov denoting the covariance $\mathrm{cov}(X,Y) \equiv \mathbb{E}\big((X - \mathbb{E}(X))(Y - \mathbb{E}(Y))\big),$ and $\mathbb{E}$ denoting the expectation. The posterior distribution is approximated by marginalising the distribution of Equation (6) over a variational distribution $q(\mathbf{u}) \sim \mathrm{Normal}(\mathbf{m},\Sigma)$, which is assumed to be a multivariate Gaussian distribution with mean $\mathbf{m}$ and covariance $\Sigma$, in which the form of $\Sigma$ is restricted for convenience, as will be described hereafter. The resulting approximation is a variational Gaussian process, given by Equation (7):

$$q\big(f(x)\big) = \int q(\mathbf{u})q(f(x)|\mathbf{u})\mathrm{d}\mathbf{u}$$

$$= \mathrm{GP}\Big(\mathbf{k_u}(x)^{\mathrm{T}}\mathbf{K}_{\mathbf{uu}}^{-1}\mathbf{m}, k(x,x') + \mathbf{k_u}(x)^{\mathrm{T}}(\mathbf{K}_{\mathbf{uu}}^{-1}\boldsymbol{\Sigma}\mathbf{K}_{\mathbf{uu}}^{-1} - \mathbf{K}_{\mathbf{uu}}^{-1})\mathbf{k_u}(x')\Big). \quad (7)$$

The method proceeds with the objective of minimising a Kuller-Leibler divergence (referred to hereafter as the KL divergence), which quantifies how much the Gaussian process $q(f(x))$ used to approximate the posterior distribution diverges from the actual posterior distribution $p(f(x)|\mathbf{X}_N)$. The KL divergence is given by equation (8):

$$\mathrm{KL}[q(f)\|p(f|\mathbf{X}_N)] = \mathbb{E}_{q(f(x))}[\log q(f(x)) - \log p(f(x)|\mathbf{X}_N)], \quad (8)$$

In which $\mathbb{E}_{q(f(x))}$ denotes the expectation under the distribution $q(f(x))$. Equation (8) is written using Bayes' theorem in the form of Equation (9):

$$\mathrm{KL}[q(f)\|p(f|\mathbf{X}_N)] = \log p(\mathbf{X}_N) - \mathbb{E}_{q(f(x))}\left[\log \frac{p(\mathbf{X}_N|f(x))p(f(x))}{q(f(x))}\right]. \quad (9)$$

The subtracted term on the right hand side of Equation (9) is referred to as the Evidence Lower Bound (ELBO), which is simplified by factorising the distributions $p(f(x))$ and $q(f(x))$, resulting in Equation (10):

$$\mathrm{ELBO} = \mathbb{E}_{q(\mathbf{u})q(\mathbf{f}_N|\mathbf{u})}[\log p(\mathbf{X}_N|\mathbf{f}_N)] - \mathbb{E}_{q(\mathbf{u})}\left[\log \frac{q(\mathbf{u})}{p(\mathbf{u})}\right], \quad (10)$$

in which $\mathbf{f}_N = \big\{f(x^{(n)})\big\}_{n=1}^N$, $p(\mathbf{u}) \sim \mathrm{Normal}(\mathbf{0}, \mathbf{K_{uu}})$ and $q(\mathbf{f}_N|\mathbf{u}) \sim \mathrm{Normal}\big(\mathbf{K_{fu}}\mathbf{K_{uu}^{-1}}\mathbf{u}, \mathbf{K_{ff}} - \mathbf{K_{fu}}\mathbf{K_{uu}^{-1}}\mathbf{K_{fu}^{T}}\big)$, in which $\mathbf{K_{fu}}[m,m'] \equiv \mathrm{cov}(f(x^{(m)}),u_{m'})$ and $\mathbf{K_{ff}}[m,m'] = \mathrm{cov}\,(f(x^{(m)}),f(x^{(m')}))$. Minimising the KL divergence with respect to the parameters of the variational distribution $q(\mathbf{u})$ is achieved by maximising the ELBO with respect to the parameters of the variational distribution $q(\mathbf{u})$. For cases in which the ELBO is tractable, any suitable nonlinear optimisation algorithm may be applied to maximise the ELBO. In this example, a gradient-based optimisation algorithm is used.

A specific choice of inducing variables $\mathbf{u}$ is chosen in order to achieve tractability of the ELBO given by Equation (10). In the particular, the inducing variables $\mathbf{u}$ are assumed to lie in an interval [a, b], and are related to components of a truncated Fourier basis on the interval [a, b], the basis defined by entries of the vector $\phi(x) = [1, \cos(\omega_1(x - a)), ..., \cos(\omega_M(x - a)), \sin(\omega_1(x - a)),..., \sin(\omega_M(x - a))]^T$, in which $\omega_m = 2\pi m/(b - a)$. The interval [a, b] should be chosen such that all of the data $\mathbf{X}_N$ lie on the interior of the interval. It can be shown that increasing the value of M necessarily improves the approximation in the KL sense, though increases the computational cost of implementing the method. The inducing variables are given by $u_m = P_{\phi_m}(f)$, where the operator $P_{\phi_m}$ denotes the Reproducing Kernel Hilbert Space (RKHS) inner product, i.e. $P_{\phi_m}(h) \equiv \langle \phi_m, h \rangle_H$. The components of the resulting vector function $\mathbf{k_u}(x)$ are given by Equation (11):

$$\mathbf{k_u}(x)[m] = \begin{cases} \phi_m(x) & \text{for } x \in [a,b] \\ \mathrm{cov}\big(P_{\phi_m}(x), f(x)\big) & \text{for } x \notin [a,b], \end{cases} \quad (11)$$

In the cases of Matérn kernels of orders 1/2, 3/2, and 5/2, simple closed-form expressions are known for the RKHS inner product (see, for example, Durrande et al, "Detecting periodicities within Gaussian processes", Peer J Computer Science, (2016)), leading to closed-form expressions for $\mathbf{k_u}(x)[m]$ both inside and outside of the interval [a,b]. Using the chosen inducing variables, elements of the matrix $\mathbf{K_{uu}}$ are given by $\mathbf{K_{uu}}[m,m'] = \langle \phi_m, \phi_{m'} \rangle_H$, and in the case of Matérn kernels of orders 1/2, 3/2, and 5/2, are readily calculated, leading to a diagonal matrix plus a sum of rank one matrices, as shown by Equation (12):

$$\mathbf{K_{uu}} = \mathrm{diag}(\boldsymbol{\alpha}) + \sum_{j=1}^{J} \boldsymbol{\beta}_j \boldsymbol{\gamma}_j^{\mathrm{T}}, \tag{12}$$

where $\alpha$, $\beta_j$, and $\gamma_j$ for $j = 1, ...,J$ are vectors of length $2M + 1$. In this example, the covariance matrix $\Sigma$ is restricted to having the same form as that given in Equation (12) for $\mathbf{K_{uu}}$, though in other examples, other restrictions may be applied to the form of $\Sigma$. In some examples, no restrictions are applied to the form of $\Sigma$. The closed-form expressions associated with Equation (11), along with the specific form of the matrix given by Equation (12), lead directly to the tractability of the ELBO given by Equation (10), as will be demonstrated hereafter. The tractability of the ELBO overcomes the problem of double-intractability that prevents other methods of evaluating the posterior distribution in Equation (3) from being applicable in many probabilistic modelling contexts. As mentioned above, some known methods circumvent the doubly-intractable problem by posing an approximate discretised problem (see, for example, Rue et al, "Approximate Bayesian inference for latent Gaussian models by using integrated nested Laplace approximations", J. R. Statist. Soc. B (2009)).

The present method is applicable to any kernel for which the RHKS associated with the kernel contains the span of the Fourier basis $\phi(x)$, and in which the RKHS inner products are known (for example, in which the RHKS inner products have known closed-form expressions). By way of example, in the case of a Matérn kernel of order 1/2 with variance $\sigma^2$ and characteristic length scale $l$, defined by $k_{1/2}(x,x') \equiv \sigma^2\exp(-|x - x'|/l)$, the matrix $\mathbf{K_{uu}}$ is given by Equation (12) with $J = 1$, and in this case $\alpha$, $\beta_1$, and $\gamma_1$ are given by Equation (13):

$$\boldsymbol{\alpha} = \frac{b-a}{2}[2s(0)^{-1}, s(\omega_1)^{-1}, ..., s(\omega_M)^{-1}, s(\omega_1)^{-1}, ..., s(\omega_M)^{-1}]^{\mathrm{T}},$$

$$\boldsymbol{\beta}_1 = \boldsymbol{\gamma}_1 = \quad [\sigma^{-1}, \quad \sigma^{-1}, ..., \quad \sigma^{-1}, \quad 0, \quad ... \quad 0]^{\mathrm{T}}, \tag{13}$$

with $s(\omega) = 2\sigma^2\lambda^2(\lambda^2 + \omega^2)^{-1}$ and $\lambda = l^{-1}$. The components of vector function $\mathbf{k_u}(x)$ for $x \notin [a, b]$ are given by Equation (14):

$$\mathbf{k_u}(x)[m] = \begin{cases} \exp(-\lambda(|x - c|)) & \text{for } m = 1, ..., M + 1 \\ 0 & \text{for } m = M + 2, ..., 2M + 1, \end{cases} \tag{14}$$

where $c$ is whichever of $a$ or $b$ is closest to $x$. In order to evaluate the ELBO, the first term on the right hand side of Equation (10) is expanded as in Equation (15):

$$\mathbb{E}_{q(\mathbf{u})q(\mathbf{f}_N|\boldsymbol{u})}[\log p(\mathbf{X}_N|\mathbf{f}_N)] = \mathbb{E}_{q(\mathbf{u})q(\mathbf{f}_N|\boldsymbol{u})}\left[\sum_{n=1}^{N} f^2(x^{(n)}) - \int_\tau f^2(x)\, \mathrm{d}x\right]. \tag{15}$$

Substituting Equation (7) into Equation (15), the first term on the right hand side of Equation (15) results in a sum of one-dimensional integrals that are straightforward to perform using any well-known numerical integration scheme (for example, adaptive quadrature), and the computational cost of evaluating this term is therefore proportional to $N$, the number of data points. The second term involves a nested integral that is *prima facie* doubly intractable. However, the outer integral is able to be performed explicitly, leading to the second term being given by a one-dimensional integral $-\int_\tau\{(\mathbf{k_u}(x)^{\mathrm{T}}\mathbf{K_{uu}^{-1}}\mathbf{m})^2 + \mathbf{k_u}(x)^{\mathrm{T}}[\mathbf{K_{uu}^{-1}}\boldsymbol{\Sigma}\mathbf{K_{uu}^{-1}} - \mathbf{K_{uu}^{-1}}]\mathbf{k_u}(x)\}\, \mathrm{d}x.$ Due to the form of $\mathbf{K_{uu}}$ given by Equation (12), the number of operations necessary to calculate the inverse $\mathbf{K_{uu}^{-1}}$ is proportional to $M$, as opposed to being proportional to $M^3$ as would be the case for a general matrix of size $(2M + 1) \times (2M + 1)$. The integrals involving $\mathbf{k_u}(x)$ are calculated in closed form using the calculus of elementary functions, and therefore the right hand side of Equation (15) is tractable.

The second term on the right hand side of Equation (10) is evaluated as in Equation (16) to give

$$-\mathbb{E}_{q(\mathbf{u})}\left[\log\frac{q(\mathbf{u})}{p(\mathbf{u})}\right] = \frac{1}{2}(M - \log|\mathbf{K_{uu}}| - \log|\mathbf{\Sigma}| - \mathrm{tr}[\mathbf{K_{uu}^{-1}}(\mathbf{mm}^{\mathrm{T}} + \mathbf{\Sigma})]).$$

$$(16)$$

As discussed above, the number of operations required to calculate the inverse $\mathbf{K_{uu}^{-1}}$ is proportional to $M$. Similarly, the number of operations required to calculate the determinants $|\mathbf{K_{uu}}|$ and $|\Sigma|$ are proportional to $M$. The computational complexity of evaluating the ELBO is therefore $O(N + M)$, where $0$ denotes the asymptotic order as $N,M \to \infty$.

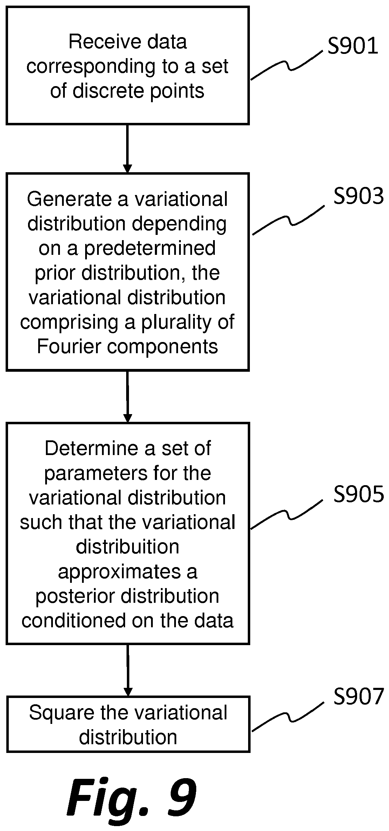

The operations discussed above will now be summarised with reference to Figure 9. As shown, data is received, at S901, corresponding to a discrete set of points. A variational distribution is then generated, at S903, depending on a predetermined prior distribution, the variational distribution comprising a plurality of Fourier components. Next, a set of parameters is determined, at S905, such that the variational distribution approximates a posterior distribution conditioned on the data. The variational distribution is then squared, at S907, to determine a stochastic intensity function.

*Extension of variational Gaussian process method to D dimensions*

The method of generating a probabilistic model described in the previous section is straightforwardly extended to multiple dimensions. Extending the method to multiple dimensions is necessary for many applications in which a probabilistic model is generated to be incorporated into a reinforcement learning environment. In an example of managing a fleet of taxis in a city, the domain over which a probabilistic model is generated includes one temporal dimension and two spatial dimensions corresponding to a two-dimensional representation of the city, and therefore $D = 3$.

Two ways of extending the method described above to multiple dimensions are discussed below.

*Method 1: additive kernels*

The simplest way to extend the method above to multiple dimensions is to use a prior that is a sum of independent Gaussian processes corresponding to the $D$ dimensions of the domain, as shown in equation (17):

$$f(x) = \sum_{d=1}^{D} f_d(x_d),$$

$$(17)$$

in which $f_d \sim \mathrm{GP}(0,k_d(x_d,x'_d))$. For each dimension, the kernel $k_d(x_d,x'_d)$ has a form compatible with the one-dimensional method described above (for example, each may be a Matérn kernel of half-integer order). This leads to a prior having an additive Kernel, as shown in Equation (18):

$$f(x) \sim \mathrm{GP}\left(0, \sum_{d=1}^{D} k_d(x_d,x'_d)\right)$$

$$(18)$$

A matrix of features is constructed in analogy to the inducing variables of the one-dimensional case, such that $u_{m,d} = P_{\phi m}(f_d)$, resulting in $DM$ features. It is straightforward to show that $\mathrm{cov}(u_{m,d},u_{m,d'}) = 0$ for $d \neq d'$, and hence the $\mathbf{K_{uu}}$ matrix in the additive case is of block-diagonal form $\mathbf{K_{uu}} = \mathrm{diag}(\mathbf{K_{uu}^{(1)}}, ..., \mathbf{K_{uu}^{(D)}})$, where each of the matrices $\mathbf{K_{uu}^{(d)}}$ for $d = 1, ..., D$ takes the convenient form given by Equation (12).

For the additive kernel case, the ELBO is tractable analogously to the one-dimensional case above, and the method proceeds with analogy to the one-dimensional case. The computational complexity increases linearly with the number of dimensions, making the additive kernel particularly suitable for high-dimensional problems.

*Method 2: separable kernels*

A second way to extend the method above to multiple dimensions is to use a prior with a separable kernel, as shown in Equation (19):

$$f(x) \sim \mathrm{GP}\left(0, \prod_{d=1}^{D} k_d(x_d, x'_d)\right), \qquad (19)$$

where each kernel factor $k_d(x_d, x'_d)$ has a form compatible with the one-dimensional method described above. A vector of features of length $M^D$ is constructed as the Kronecker product of truncated Fourier bases over $[a_d, b_d]$ for each dimension, as shown in Equation (20):

$$\phi(x) = \otimes_d [\phi_1(x_d), \dots, \phi_M(x_d)]^{\mathrm{T}}. \qquad (20)$$

Inducing variables **u** are defined analogously to the one-dimensional case, with $u_m = P_{\phi_m}(f)$. The resulting $\mathbf{K_{uu}}$ matrix in the separable case is given by the Kronecker product of $\mathbf{K_{uu}} = \otimes_d \mathbf{K_{uu}^{(d)}}$, where each of the matrices $\mathbf{K_{uu}^{(d)}}$ for $d = 1, \dots, D$ takes the convenient form given by Equation (18).

For the separable kernel case, the number of inducing variables grows exponentially with the number of dimensions, allowing for very detailed representations with many basis functions. The ELBO is still tractable and the required integrals can still be calculated in closed form. However, the computational complexity is proportional to $M^D$, and therefore the separable kernel case may require more computational resources than the additive kernel case for cases of high dimensions.

*Correctness by learning*

In the following section, a novel method is discussed for avoiding bad states in a system referred to as a transition system. In such a system, at a discrete set of time steps, a collaborative group of agents (referred to collectively as a composite agent) perform actions simultaneously on an environment, causing the environment to transition from one state to another. A wide variety of complex software systems can be described as transition systems and the algorithm described hereafter is applicable to any of these, leading to runtime enforcement of correct behaviour in such software systems. In some examples, the agents correspond to real-world entities...

At a given time step, a co-ordinator receives state signals from $N_A$ agents, each state signal indicating a component state $s_i \in Q_i$ experienced by one of the agents, where $Q_i$ is the set of all possible component states that the $i^{th}$ agent can experience. Each set $Q_i$ for $i = 1, \dots, N_A$ may be finite or infinite, depending on the specific transition system. A composite state $s \in Q$, referred to hereafter as a state $s$, where $Q \otimes_{i=1}^{N_A} Q_i$, is a tuple of all of the component states $s_i$ experienced by the $N_A$ agents. A subset $\tilde{Q} \subset Q$ of states are defined as bad states.

The co-ordinator receives state signals in the form of feature vectors $q_i(s)$ for $i = 1, 2, \dots, N_A$. In response to receiving state signals indicating a state s, the co-ordinator selects and performs an interaction $a$ from a set $\Gamma_s \subseteq \Gamma$ of available interactions in the state $s$, based on a policy $\pi$, where $\Gamma$ is the set of all possible interactions in the transition system. Performing an interaction means instructing each of the $N_A$ agents to perform an action from a set of actions that are available to that agent, given the state of the agent. In some interactions, the co-ordinator may instruct one or more of the agents not to perform any action. For some states, several interactions will be possible. The objective of the present method (referred to as the correctness by learning method) is to learn a policy for the co-ordinator such that choosing interactions in accordance with the policy leads to the reliable avoidance of bad states.

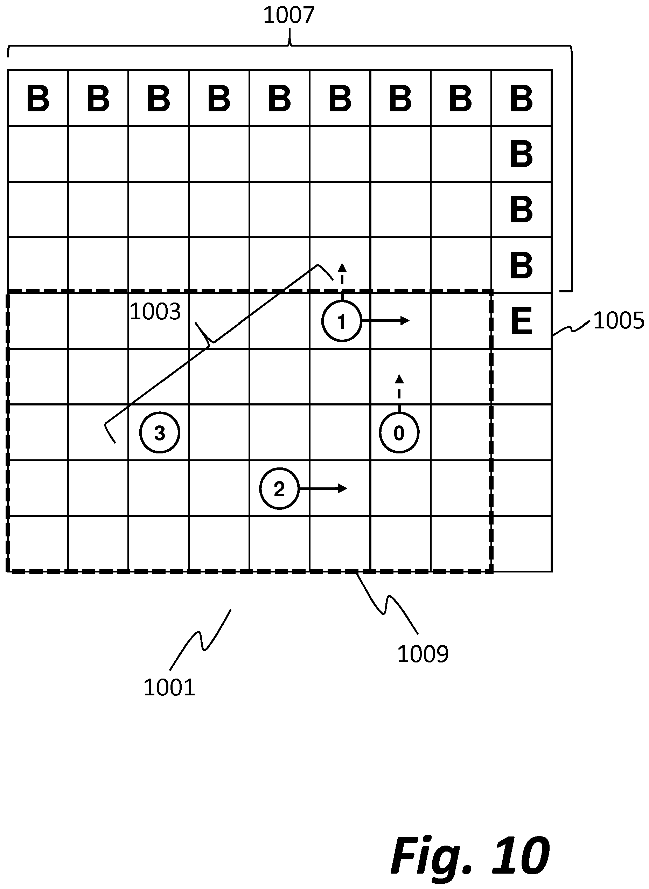

Figure 10 shows an example of a simple transition system. In this example, the problem system includes 9 × 9 grid 1001, and four robots, referred to collectively as robots 1003 and labelled Robot 0, 1, 2, and 3 respectively. Robots 1003 are synchronised such that for $i = 0,1,2,3$, Robot $i$ must move simultaneously with, in the same direction as, either Robot $i$ - 1 (modulo 4) or Robot $i$ + 1 (modulo 4). Furthermore, robots 1003 are only permitted to move one square at a time, and only in the right or upwards directions. For example, given the state shown in Figure 10, one possible interaction is for Robot 1 and Robot 2 both to move one square to the right, as indicated by the solid arrows. Another possible interaction is for Robot 0 and Robot 1 both to move one square upwards, as indicated by the dashed arrow. Grid 1001 includes exit square 1005 in the centre of the right hand column, labelled **E**. The remaining robots continue, with Robot $i$ moving simultaneously with either Robot $i$ - 1 (modulo 3) or Robot $i$ + 1 (modulo 3). The squares in the upper row and the squares above the exit square in the right hand column are bad squares 1007, labelled **B**. For a single episode, robots 1003 are assigned starting locations within dashed box 1009 (level with, or below, exit square 1005, and not including the right-hand column). The aim of the problem is to learn, for any given starting locations of robots 1003, a policy that guides all of the robots 1003 to exit square 1005, without any of the robots 1003 landing on a bad square 1007. In other examples, the problem is extended straightforwardly to other $N_s \times N_s$ grids for which $N_s$ is an odd number, and for other integer numbers $N_R$ of robots.

The present problem illustrates an advantage of the present method over known runtime-enforcement tool sets such as Runtime-Enforcement Behaviour Interaction Priority, referred to hereafter as RE-BIP, and previous game-theoretic methods. In contrast with the present method, these methods are all limited to one-step recovery, meaning that if the transition system enters a correct state from which all reachable states are bad states, the method fails. For example, in the state shown in Figure 10, if Robot 1 moves upward, it will enter a region of grid 1001 which is not a bad state, but for which it will eventually always reach a state for which it is only possible to reach a bad state. As a results, any method that is limited to one-step recovery will fail if such a state is encountered. Methods limited to one-step recovery therefore cannot be used to solve the present problem.

In order for the data processing system of Figure 4 to apply the correctness by learning method to the present problem, an agent is assigned to each of the four robots 1003, along with a co-ordinator that receives state signals from the agents and sends instructions to the agents, causing the robots to move in accordance with the instructions. In this example, robots 1003 and grid 1001 are both virtual entities (the problem system is virtual), but in another embodiment, the robots are physical entities moving on a physical grid (in which case, the problem system is physical) and the agents send control signals to the robots, causing them to move. In either case, the environment is a virtual representation of the grid, indicating the locations of each of the robots. At each time step, for $i$ = 0,1, 2, 3, Agent $i$ assigned to Robot $i$ sends a state signal to the co-ordinator in the form of a 2-component vector $q_i(s_i) = (x,y)^T$, where $(x,y) \in [0,8]^2$ encodes integer Cartesian co-ordinates of the robot.

Returning to the case of a general transition system, at time step $n$ the co-ordinator receives state signals indicating a state $S_n$, performs an interaction $A_n$, and receives updated state signals indicating a new state $S_{n+1}$. As described above with regard to reinforcement learning algorithms, a reward function $R(s)$ is associated with the each state encountered. In this example, the reward function is given by Equation (21):

$$R(s) = \begin{cases} R_+ \text{ for } s \notin \tilde{Q}, \\ R_- \text{ for } s \in \tilde{Q}, \end{cases} \tag{21}$$

where $R_+ > R_-$. In a specific example, $R_+$ = 1 and $R_-$ = -1.

In this example, the task associated with the problem is treated as being episodic (as is the case in the example problem illustrated by Figure 10), although it is also straightforward to apply the method described hereafter to problems having continuous tasks by breaking the continuous task into episodes with a predetermined number of time steps. The return associated with an initial state $S_0 = s$ is given by substituting $n$ = 0 into Equation (1). The state value function for the state $s$ is therefore given by Equation (22):

$$v_\pi(s) = \mathbb{E}_\pi \left( \sum_{j=0}^{T-1} \gamma^j R(S_{j+1}) \right), \tag{22}$$

where for each episode, $T$ is the number of time steps in the episode. The method proceeds with the objective of finding an optimal policy $\pi^*$ such that the state value function $v_\pi(s)$ is maximised for all states $s \in Q$.

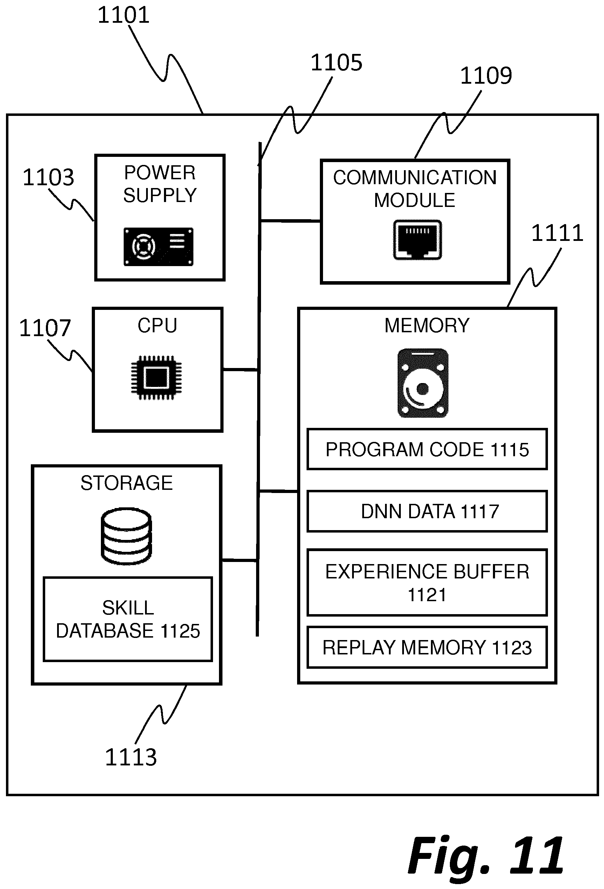

Figure 11 shows server 1101 configured to implement a learning subsystem in accordance with the present invention in order to implement the correctness by learning algorithm described hereafter. In this example, the learning subsystem is implemented using a single server, though in other examples the learning subsystem is distributed over several servers as described elsewhere in the present application. Server 1101 includes power supply 1103 and system bus 1105. System bus 1105 is connected to: CPU 1107; communication module 1109; memory 1111; and storage 1113. Memory 1111 stores program code 1115; DNN code 1117; experience buffer 1121; and replay memory 1123. Storage 1113 stores skill database 1125. Communication module 1109 receives experience data from an interaction subsystem and sends policy data to the interaction subsystem (thus implementing a policy sink).

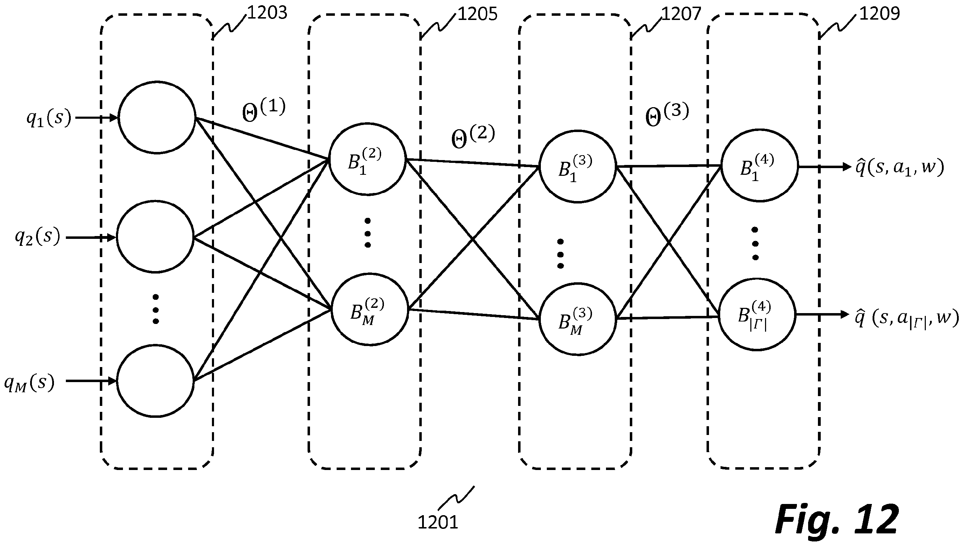

Figure 12 shows DNN 1201 used by server 1101 to implement the correctness by learning algorithm. DNN 1201 is similar to DNN 601 of Figure 6, but in contrast to DNN 601, DNN 1201 is used to estimate action value functions, rather than state value functions. The approximate action value functions learned are denoted $\hat{q}(s,a,w)$, which depend on: (composite) state $s$; interaction $a$; and weight vector $w$, where weight vector $w$ contains the elements of the connection weight matrices $\Theta^{(j)}$ of DNN 1201. The specific architecture of DNN 1201 is illustrative, and different architectures will be suitable for different transition systems, depending on the complexity and nature of the approximate action value function to be learnt. In contrast to output layer 609 of DNN 601, which had only one node, output layer 1209 of DNN 1101 has $|\Gamma|$ nodes, where $|\Gamma|$ denotes the number of elements in the set $\Gamma$ of possible interactions. Input layer 1203 of DNN 1201 has $M = N_A \times N_F$ nodes, where $N_A$ is the number of agents and $N_F$ is the number of features in each feature vector $q_i(s)$. For example, in the problem of Figure 10, $M = 4 \times 2 = 8$. Data associated with DNN 1201, including data corresponding to the network architecture and the connection weights, is stored as DNN data 1117 in memory 1111.

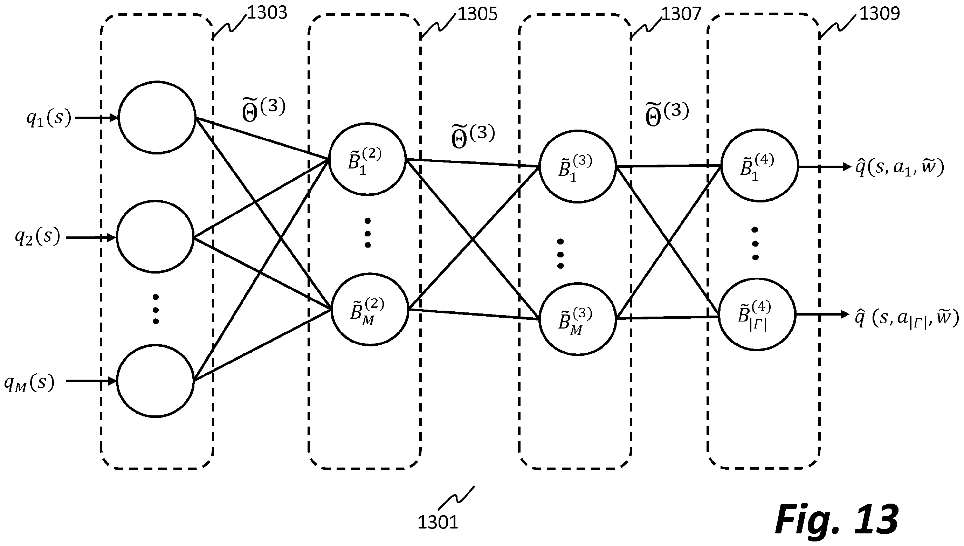

As shown in Figure 13, alternative DNN 1301 has the same architecture as DNN 1101, but the connection weights are given by alternative weight vector $\tilde{w}$, corresponding to alternative weight matrices $\tilde{\Theta}^{(j)}$ of DNN 1301.

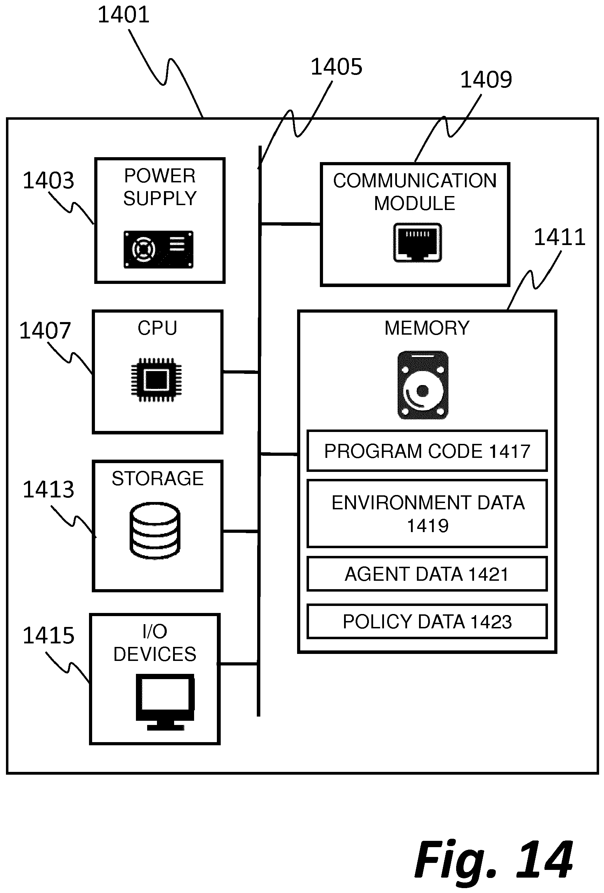

Figure 14 shows local computing device 1401 configured to implement an interaction subsystem in accordance with the present invention in order to implement the correctness by learning algorithm described hereafter. Local computing device 1401 includes power supply 1403 and system bus 1405. System bus 1405 is connected to: CPU 1407; communication module 1409; memory 1411; storage 1413; and input/output (I/O) devices 1415. Memory 1411 stores program code 1417; environment 1419; agent data 1421; and policy data 1423. In this example, I/O devices 1415 include a monitor, a keyboard, and a mouse. Communication module 1409 receives policy data from server 1101 (thus implementing a policy source) and sends experience data to server 1101 (thus implementing an experience sink).

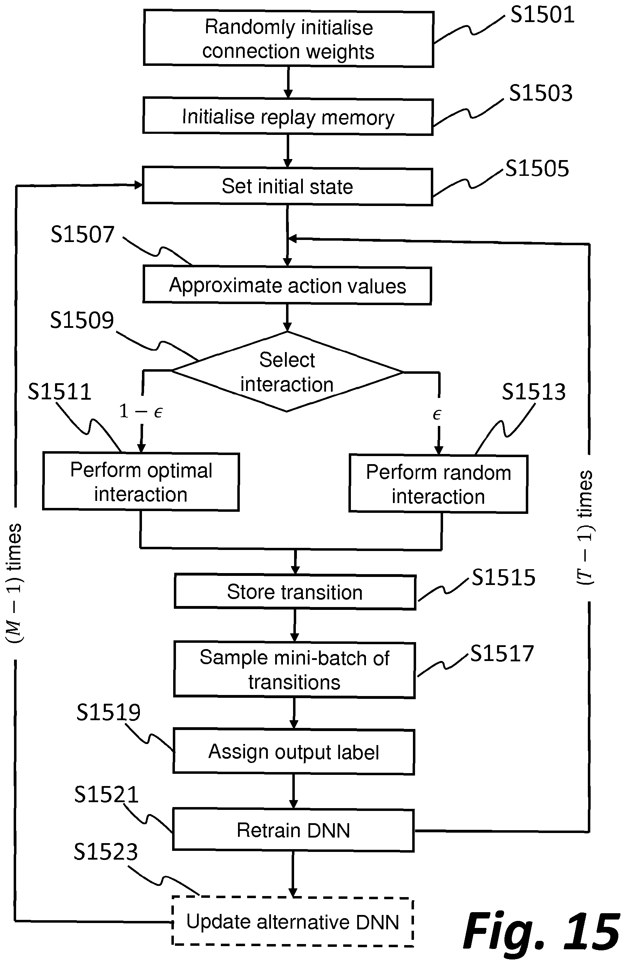

In order to implement the correctness be learning algorithm, server 1101 and local computing device 1401 execute program code 1115 and program code 1417 respectively, causing the routine of Figure 15 to be implemented. The routine begins with server 1101 randomly initialising, at S1501, the connection weights of DNN 1201 in an interval $[-\delta,\delta]$, where $\delta$ is a small positive parameter. Server 1101 transfers copies of the randomly initialised connection weights of DNN 1201 to local computing device 1401, where they are saved as policy data 1423. Server 1101 also updates alternative DNN 1301 to have the same connection weights as DNN 1201.

Server 1101 then initialises, at S1503, replay memory 1123 to store experience data corresponding to a number $N_T$ of transitions.

The routine now enters an outer loop corresponding to episodes of the transition system task. For each of a total number $M$ of episodes, local computing device 1401 sets, at S1505, an initial state $S_0$ of the transition system. In some examples, the initial state is selected randomly. In other examples, the initial state is selected as a state from which all other states in the system can be reached. In the example of Figure 10, the initial state is set with all four of robots 1003 at the bottom left square, so that $q_i(S_0) = (0,0)^T$ for $i = 1,2,3,4$, which is the only state for which all other possible states of the system are able to be reached. For transition systems in which it is not clear to a user which states are able to be reached from which other states, the initial state should be selected randomly. This may be the case, for example, in transition systems for which the set $Q$ of states is infinite.

After the initial state has been set, the routine enters an inner loop corresponding to the T time steps in the episode.

For each time step in the episode, computing device 1401 calculates, at S1507, approximate action values $\hat{q}(S_j,a,w)$ by inputting the feature vectors $q_i(S_j)$ for $i = 1,..., N_A$ into the copy of DNN 1201 saved in policy data 1323, and applying forward propagation. The approximate action values are given by the activations of the nodes in the output layer of the copy of DNN 1201.

Next, the co-ordinator selects and performs, at S1509, an interaction $A_j = a$ from a set $\Gamma_s \subseteq \Gamma$ of available interactions in the state $S_j = s$. Specifically, the co-ordinator stochastically selects either an optimal interaction (at S1511) or a random interaction (at S1513). The probability of selecting a random interaction is given by $\varepsilon$, where $\varepsilon$ is a parameter satisfying $0 < \varepsilon < 1$, and accordingly the probability of selecting an optimal interaction is $1 - \varepsilon$. In this example, selecting a random interaction means selecting any interaction from the set $\Gamma_s$ of available interactions, with each interaction in $\Gamma_s$ having an equal probability of being selected. Selecting an optimal interaction, on the other hand, means selecting an interaction according to a greedy policy $\pi$ defined by Equation (23):

$$\pi(s) = \mathrm{argmax}\{\hat{q}(s,a,w)|a \in \Gamma_s\}, \tag{23}$$

which states that the policy $\pi$ selects the interaction $a$ from the set $\Gamma_s$ that has the highest approximate action value function $\hat{q}(s,a,w)$, as calculated at S1507. According to the above rule, the co-ordinator follows an $\varepsilon$-greedy policy.

After the co-ordinator performs an interaction according to the rule above, the agents send a new set of state signals to the co-ordinator, indicating a new state $S_{j+1}$ along with a reward $R(S_{j+1})$, calculated in this example using Equation (21). Local computing device 1401 sends experience data corresponding to the transition to server 1101. Server 1101 stores, at S1515, the transition in the form of a tuple $(S_j,A_j,S_{j+1},R(S_{j+1}))$, in replay memory 1123. Server 1101 samples, at S1517, a mini-batch of transitions from replay memory 1123 consisting of $N_2$ tuples of the form $(S_k,A_k,S_{k+1},R(S_{k+1}))$, where $N_2 \leq N_T$.

For each of the transitions in the sampled mini-batch, server 1101 assigns, at S1519, an output label $y_k$ using the rule of Equation (24) below:

$$y_k = \begin{cases} R(S_{k+1}) \text{ if } S_{k+1} \text{ is a bad state,} \\ R(S_{k+1}) + \gamma \max\{\hat{q}(S_{k+1}, a, \widetilde{w}) | a \in \Gamma_s\} \text{ otherwise,} \end{cases} \quad (24)$$

which states that if $S_{k+1}$ is a bad state, $y_k$ is given by the evaluation of the reward function associated with $S_{k+1}$, and if $S_{k+1}$ is not a bad state, $y_k$ is given by the evaluation of the reward function associated with $S_{k+1}$, added to the product of a discount factor $\gamma$ and the highest approximate action value from the state $S_{k+1}$, as calculated using alternative DNN 1301.

Server 1101 retrains DNN 1201 by treating $(S_k, y_k)$ for $k$ = 1, ..., $N_2$ as labelled training examples. Training DNN 1201 in this example includes inputting the feature vectors $q_i(S_k)$ for $i$ = 1,...,$N_A$ into DNN 1201 and applying the well-known supervised learning technique of forward propagation, backpropagation, and gradient descent, to update the connection weights of DNN 1201.

The method of retraining DNN 1201 using a randomly sampled mini-batch of transitions is referred to as experience replay. Compared with the naive alternative of retraining DNN 1201 using a chronological sequence of transitions, experience replay ensures that data used in retraining DNN 1201 is uncorrelated (as opposed to training a DNN using successive transitions, which are highly correlated), which reduces the probability of the gradient descent algorithm leading to a set of connection weights corresponding to a local minimum. Furthermore, experience replay allows the same transitions to be used multiple times in retraining DNN 1201, thereby improving the efficiency of the training with respect to the number of transitions experienced.

At the end of every $K$ episodes, where $K < M$, server 1101 updates, at S1523, alternative DNN 1301 to have the same connection weights as DNN 1201.

After the outer loop has executed $M$ times, server 1101 saves the connection weights of DNN 1201 in skill database 1125.

*Fairness in correctness by learning*

In the correctness by learning algorithm described above, the co-ordinator follows an $\varepsilon$-greedy policy, meaning that the co-ordinator selects a greedy interaction according to Equation (23) with probability 1 - $\varepsilon$. In another example, the greedy policy of Equation (23) is replaced with the fair policy of Equation (25):

$$\pi(s) = \{a | a \in \Gamma_s \wedge \hat{q}(s, a, w) > \max\{\hat{q}(s, a, w)\} - F\}, \quad (25)$$

which states that the co-ordinator randomly selects an interaction $a$ from all of the interactions in the set $\Gamma_s$ that are within a tolerance $F > 0$ of the interaction having the maximum estimated action value function. The value of the tolerance parameter $F$ is configurable and a higher value of $F$ leads to more deviation from the optimal policy. The policy of Equation (25) allows the transition system to learn traces that are different from the optimal trace (corresponding to the policy of Equation (21)) but which also avoid bad states.

The above embodiments are to be understood as illustrative examples of the invention. Further embodiments of the invention are envisaged. For example, a range of well-known reinforcement learning algorithms may be applied by a learner, depending on the nature of a reinforcement learning problem. For example, for problems having tasks with a relatively small number of states, in which all of the possible states are provided, synchronous or asynchronous dynamic programming methods may be implemented. For tasks having larger or infinite numbers of states, Monte Carlo methods or temporal-difference learning may be implemented. Reinforcement learning methods using on-policy approximation or off-policy approximation of state value functions or action value functions may be implemented. Supervised-learning function approximation may be used in conjunction with reinforcement learning algorithms to learn approximate value functions. A wide range of linear and nonlinear gradient descent methods are well-known and may be used in the context of supervised-learning function approximation for learning approximate value functions.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Modifications and further embodiments**

In some examples, the invention can incorporate *Mechanism Design,* which is a field in economics and game theory that takes an engineering approach to designing incentives, toward desired objectives, in strategic settings, assuming players act rationally. For example, in a ridesharing company or a fleet management problem as the one previously described, in order to arrive to a solution that is good for the parties to the system (i.e. city council, taxi company, passengers and drivers), their preferences among different alternative results is considered (e.g. a specific task allocation) using mechanism design principles together with learning techniques to assess preferences of the parties in such a way that the parties willingly share this information and have no incentive to lie about it.

**Claims**

1. A machine learning system comprising a first subsystem and a second subsystem remote from the first subsystem, the first subsystem comprising:

   an environment having multiple possible states, the environment being arranged to output a state signal comprising data indicative of the state of the environment at a discrete time and to receive an action signal operable to cause a change of state;
   a decision making subsystem comprising one or more agents, each agent being configured to generate an action signal dependent on the data conveyed by the received state signal and a policy associated with that agent, the decision making subsystem being further arranged to generate experience data dependent on data conveyed by the state signal and the action signal; and
   a first network interface configured to send said experience data to the second subsystem and to receive policy data from the second subsystem, and the second subsystem comprising:
   a second network interface configured to receive experience data from the first subsystem and send policy data to the first subsystem; and
   a learning routine configured to process said received experience data to generate said policy data, dependent on the experience data, for updating one or more policies associated with the one or more agents,

   wherein the decision making subsystem is operable to update the one or more policies associated with the one or more agents in accordance with policy data received from the second subsystem.

2. The system of claim 1, wherein the sending of state signals and action signals between the environment and the one or more agents is decoupled from the sending of experience data and policy data between the first subsystem and the second subsystem.

3. The system of any previous claim, wherein the decision making system comprises a plurality of agents.

4. The system of claim 4, wherein:

   the decision making subsystem comprises at least one co-ordinator configured to receive state signals from two or more of the plurality of agents and to send instructions to the two or more agents dependent on the state signals received from the two or more agents and one or more policies associated with the at least one co-ordinator; and
   the two or more agents are configured to generate action signals based on the received instructions.

5. The system of claim 4, wherein the action signals based on the received instructions are configured such that the agents generate action signals to avoid a predetermined set of states.

6. The system of any previous claim, wherein the first subsystem is implemented on a distributed computing system.

7. The system of any previous claim, wherein the environment simulates a physical system, and the second subsystem is operable to receive data corresponding to measured properties of the physical system.

8. The system of claim 7, wherein the one or more agents are associated with physical entities in the physical system, and the second subsystem is operable to send signals dependent on the one or more policies to the physical entities.

9. The system of claim 8, wherein the second subsystem is operable to send control signals dependent on the one or more policies to the physical entities.

10. The system of any of previous claim, wherein the environment incorporates a probabilistic model, and wherein the environment is operable to generate a state signal comprising probabilistic data relating to future states of the environment.

11. The system of claim 10, wherein the probabilistic model is operable to be updated following the application of a Bayesian inference scheme to a set of data corresponding to variables associated with the virtual environment.

12. The system of claim 10 or 11, wherein the machine learning system is configured to generate artificial data using the probabilistic model.

13. The system of any of claims 10 to 12, wherein the probabilistic model approximate a stochastic intensity function, and is configured to:

receive data corresponding to a set of discrete observations;
generate a variational distribution depending on a predetermined prior distribution and comprising a predetermined number of Fourier components; and
determine a set of parameters for the variational distribution such that the variational distribution approximates a posterior distribution conditioned on the data, the posterior distribution corresponding to the square root of the stochastic intensity function.

14. A computer-implemented method of approximating a stochastic intensity function associated with a set of discrete points in a domain, comprising:

receiving data corresponding to the set of discrete points;
generating a variational distribution depending on a predetermined prior distribution and comprising a predetermined number of Fourier components; and
determining a set of parameters for the variational distribution such that the variational distribution approximates a posterior distribution conditioned on the data, the posterior distribution corresponding to the square root of the stochastic intensity function.

15. The method of claim 14, wherein the domain has a temporal dimension, and each discrete point has a temporal coordinate.

16. The method of claim 15, wherein each discrete point corresponds to an observation of an event in a real-world system.

**Fig. 1**

**Fig. 2**

*Fig. 3*

a)

Policy source

303

305

301a

A    A    A    A

301

b)

313

Policy source

315

317

A    C

A

A

A

311

c)

323

Policy source

337

327

C    C

A    A    A    A

331                      321

**423**

Learner

**419**

**421**

Experience buffer

**425**

Policy sink

**427**

**403**

Network Interface

**431**

Network Interface

**429**

Experience sink

**417**

**401**

Decision making system

A   A   A

**407a**   **411**

**405**

Policy source

Environment

**409**

Problem system

E   E   E

**413**

**415**

*Fig. 4*

Interaction subsystem | Learning subsystem

Generate experience data

S501

Send experience data to experience sink

S503

Send experience data to experience database

S505

S507

Store experience data

Send experience data to experience buffer

S509

Send experience data to learner

S511

Implement reinforcement learning algorithm

S513

Send policy data to policy sink

S515

S519

Send policy data to policy source

Send policy data to agents

S517

Update policies

S521

*Fig. 5*

**Fig. 6**

EP 3 467 717 A1

```
┌─────────────────────────┐
│   Randomly initialise   │ ⟋ S701
│   connection weights    │
└─────────────────────────┘
            │
            ▼
┌─────────────────────────┐
│   Receive experience    │ ⟋ S703
│          data           │
└─────────────────────────┘
            │
            ▼
┌─────────────────────────┐
│  Supply feature vector to │ ⟋ S705
│          DNN            │
└─────────────────────────┘
            │
            ▼
┌─────────────────────────┐
│   Implement forward     │ ⟋ S707
│     propagation         │
└─────────────────────────┘
            │
            ▼
┌─────────────────────────┐
│     Implement           │ ⟋ S709
│   backpropagation       │
└─────────────────────────┘
            │
            ▼
┌─────────────────────────┐
│  Implement gradient     │ ⟋ S711
│  descent to update      │
│  connection weights     │
└─────────────────────────┘
```

# Fig. 7

**Fig. 8**

```
┌─────────────────────────┐
│     Receive data        │
│  corresponding to a set │ ～ S901
│    of discrete points   │
└─────────────────────────┘
            │
            ▼
┌─────────────────────────┐
│  Generate a variational │
│  distribution depending │ ～ S903
│   on a predetermined    │
│   prior distribution, the│
│  variational distribution│
│  comprising a plurality of│
│   Fourier components    │
└─────────────────────────┘
            │
            ▼
┌─────────────────────────┐
│    Determine a set of   │
│     parameters for the  │
│  variational distribution│ ～ S905
│   such that the variational│
│       distribuition     │
│      approximates a     │
│   posterior distribution│
│  conditioned on the data│
└─────────────────────────┘
            │
            ▼
┌─────────────────────────┐
│  Square the variational │ ～ S907
│       distribution      │
└─────────────────────────┘
```

# *Fig. 9*

*Fig. 10*

1101

1105

1109

1103 | POWER SUPPLY

COMMUNICATION MODULE

1111

1107 | CPU

MEMORY

PROGRAM CODE 1115

DNN DATA 1117

EXPERIENCE BUFFER 1121

REPLAY MEMORY 1123

STORAGE

SKILL DATABASE 1125

1113

*Fig. 11*

Fig. 12

Fig. 13

1401

1405

1409

1403

POWER
SUPPLY

COMMUNICATION
MODULE

1411

1407

CPU

MEMORY

PROGRAM CODE 1417

ENVIRONMENT DATA
1419

1413

STORAGE

AGENT DATA 1421

POLICY DATA 1423

1415

I/O
DEVICES

*Fig. 14*

```
                    ┌─────────────────────────┐
                    │  Randomly initialise    │ ⟿ S1501
                    │  connection weights     │
                    └─────────────────────────┘
                                │
                                ▼
                    ┌─────────────────────────┐
                    │  Initialise replay memory│ ⟿ S1503
                    └─────────────────────────┘
                                │
                                ▼
                    ┌─────────────────────────┐
                    │     Set initial state   │ ⟿ S1505
                    └─────────────────────────┘
                                │
         S1507 ⟿                ▼
                    ┌─────────────────────────┐
                    │  Approximate action values│
                    └─────────────────────────┘
                                │
         S1509 ⟿                ▼
                          ╱  Select  ╲
                         ╱ interaction ╲
                          ╲           ╱
                  1 − ε ╱   ╲         ╱   ╲ ε
                       ▼                    ▼
   S1511 ⟿   ┌──────────────────┐   ┌──────────────────┐  ⟿ S1513
             │ Perform optimal  │   │ Perform random   │
             │  interaction     │   │  interaction     │
             └──────────────────┘   └──────────────────┘
                                │
                                ▼
                    ┌─────────────────────────┐
                    │     Store transition    │ ⟿ S1515
                    └─────────────────────────┘
                                │
                                ▼
                    ┌─────────────────────────┐
                    │  Sample mini-batch of   │ ⟿ S1517
                    │     transitions         │
                    └─────────────────────────┘
                                │
         S1519 ⟿                ▼
                    ┌─────────────────────────┐
                    │   Assign output label   │
                    └─────────────────────────┘
                                │
         S1521 ⟿                ▼
                    ┌─────────────────────────┐
                    │      Retrain DNN        │
                    └─────────────────────────┘
                                │
         S1523 ⟿                ▼
                    ┌ ─ ─ ─ ─ ─ ─ ─ ─ ─ ─ ─ ─ ┐
                    │ Update alternative DNN  │
                    └ ─ ─ ─ ─ ─ ─ ─ ─ ─ ─ ─ ─ ┘
```

$(M − 1)$ times

$(T − 1)$ times

*Fig. 15*

Europäisches
Patentamt

European
Patent Office

Office européen
des brevets

**EUROPEAN SEARCH REPORT**

Application Number

EP 17 27 5185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2017/076201 A1 (VAN HASSELT HADO PHILIP [GB] ET AL) 16 March 2017 (2017-03-16)<br>* abstract *<br>* paragraph [0002] - paragraph [0048] *<br>* paragraph [0053] - paragraph [0065]; claims 1,3-7, 9-13, 15-18 *<br>----- | 1-12<br><br>13 | INV.<br>G06N3/00<br>G06N3/04<br>G06N3/08<br>G06N7/00 |
| X<br><br><br><br><br><br><br><br>Y | James Hensman ET AL: "Variational Fourier features for Gaussian processes",<br>,<br>21 November 2016 (2016-11-21),<br>XP055487068,<br>Retrieved from the Internet:<br>URL:https://arxiv.org/pdf/1611.06740v1.pdf<br>[retrieved on 2018-06-19]<br>* abstract *<br>* section 3; section 5; section 6;;<br>figures 4, 5, 8, 9, 10; table 2 *<br>----- | 14-16<br><br><br><br><br><br><br><br>13 | |
| A | YAAKOV ENGEL ET AL: "Reinforcement learning with Gaussian processes", PROCEEDINGS / TWENTY-SECOND INTERNATIONAL CONFERENCE ON MACHINE LEARNING, BONN, GERMANY, 7 - 11 AUGUST, 2005, ASSOCIATION FOR COMPUTING MACHINERY, NEW YORK,<br>7 August 2005 (2005-08-07), pages 201-208,<br>XP058203911,<br>DOI: 10.1145/1102351.1102377<br>ISBN: 978-1-59593-180-1<br>* the whole document *<br>----- | 1-16 | TECHNICAL FIELDS SEARCHED (IPC)<br><br>G06N<br>G05B<br>G06F<br>G06Q |
| A | US 9 314 924 B1 (LAURENT PATRYK [US] ET AL) 19 April 2016 (2016-04-19)<br>* the whole document *<br>-----<br>-/-- | 1-13 | |

The present search report has been drawn up for all claims

| Place of search | Date of completion of the search | Examiner |
|---|---|---|
| The Hague | 28 June 2018 | Tsakonas, Athanasios |

EPO FORM 1503 03.82 (P04C01)

page 1 of 2

Europäisches
Patentamt

European
Patent Office

Office européen
des brevets

# EUROPEAN SEARCH REPORT

Application Number

EP 17 27 5185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VISERAS ALBERTO ET AL: "Decentralized multi-agent exploration with online-learning of Gaussian processes", 2016 IEEE INTERNATIONAL CONFERENCE ON ROBOTICS AND AUTOMATION (ICRA), IEEE, 16 May 2016 (2016-05-16), pages 4222-4229, XP032908687, DOI: 10.1109/ICRA.2016.7487617 [retrieved on 2016-06-08] * the whole document * ----- | 1-16 | |
| A | CN 105 955 921 A (UNIV SOOCHOW) 21 September 2016 (2016-09-21) * the whole document * ----- | 1-13 | |

TECHNICAL FIELDS
SEARCHED      (IPC)

The present search report has been drawn up for all claims

| Place of search | Date of completion of the search | Examiner |
|---|---|---|
| The Hague | 28 June 2018 | Tsakonas, Athanasios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 27 5185

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2018

| Patent document cited in search report | | Publication date | Patent family member(s) | | Publication date |
|---|---|---|---|---|---|
| US 2017076201 | A1 | 16-03-2017 | CN 107851216 A | | 27-03-2018 |
| | | | EP 3295384 A1 | | 21-03-2018 |
| | | | KR 20180010241 A | | 30-01-2018 |
| | | | US 2017076201 A1 | | 16-03-2017 |
| | | | WO 2017044842 A1 | | 16-03-2017 |
| US 9314924 | B1 | 19-04-2016 | US 9314924 B1 | | 19-04-2016 |
| | | | US 2016303738 A1 | | 20-10-2016 |
| CN 105955921 | A | 21-09-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DURRANDE et al.** Detecting periodicities within Gaussian processes. *Peer J Computer Science,* 2016

- **RUE et al.** Approximate Bayesian inference for latent Gaussian models by using integrated nested Laplace approximations. *J. R. Statist. Soc. B,* 2009